# EUROPÄISCHE PATENTSCHRIFT

(11) **EP 4 185 448 B1**
(45) Veröffentlichungstag und Bekanntmachung des Hinweises auf die Patenterteilung: **01.05.2024**
(21) Anmeldenummer: 21748893.1
(22) Anmeldetag: 26.07.2021
(51) Int. Cl.: B29C 45/33, B29C 45/44, B29C 45/26, B29L 31/56

(54) **KUNSTSTOFF-SPRITZWERKZEUG ZUR HERSTELLUNG EINER VERSCHLUSSKAPPE SOWIE VERFAHREN ZUR HERSTELLUNG EINER VERSCHLUSSKAPPE**
PLASTIC INJECTION TOOL FOR PRODUCING A CLOSURE CAP, AND METHOD FOR PRODUCING A CLOSURE CAP
OUTIL D'INJECTION DE MATIÈRE PLASTIQUE SERVANT À PRODUIRE UN CAPUCHON DE FERMETURE, ET PROCÉDÉ DE PRODUCTION D'UN CAPUCHON DE FERMETURE

(30) Priorität: 24.07.2020 DE 102020119585
(43) Veröffentlichungstag der Anmeldung: 31.05.2023
(73) Patentinhaber: z-moulds gmbh, 6850 Dornbirn (AT)
(72) Erfinder: STEURER, Johannes, 6941 Langenegg (AT); HELTH, Franz, 6845 Hohenems (AT); SCHNEIDER, Erik, 6842 Koblach (AT)
(74) Vertreter: Müller, Enno
(86) Internationale Anmeldenummer: PCT/EP2021/070813
(87) Internationale Veröffentlichungsnummer: WO 2022/018296

(56) Entgegenhaltungen:
- EP-B1- 1 905 566
- DE-A1-102018 126 537
- US-A1- 2001 015 341

## Beschreibung

### Gebiet der Technik

Die Erfindung betrifft ein Kunststoff-Spritzwerkzeug zur Herstellung einer Verschlusskappe mit einem Kappenkörper und einer integral materialeinheitlich mit dem Kappenkörper ausgebildeten Kappendecke, wobei die Kappendecke als relativ zu dem Kappenkörper bewegbarer Kappendeckel ausgebildet sein kann, wobei weiter das Spritzwerkzeug in relativ zueinander verfahrbare erste und zweite Formhälften aufgeteilt ist und wobei in der ersten Formhälfte eine Anspritzdüse ausgebildet ist, wobei weiter in der zweiten Formhälfte radial außen zu einem zentralen Werkzeugkern Schiebebacken-Werkzeugteile ausgebildet sind, die zugleich in einer Ausstoßrichtung der hergestellten Verschlusskappe und senkrecht zu der Ausstoßrichtung bewegbar sind, und in den Schiebebacken-Werkzeugteilen jeweils eine Teil-Spritzkontur des Kappenkörpers ausgebildet ist, wobei die Teil-Spritzkonturen zusammengefasst in einer Umfangsrichtung der Verschlusskappe eine Gesamt-Spritzkontur des durch die Schiebebacken-Werkzeugteile gebildeten Teils des Kappenkörpers ergeben, wobei weiter zugeordnet der zweiten Formhälfte ein Ausstoßer vorgesehen ist, zum Ausstoßen der hergestellten Verschlusskappe.

Weiter betrifft die Erfindung ein Verfahren zur Herstellung einer Verschlusskappe in einem Kunststoff-Spritzwerkzeug, wobei die Verschlusskappe einen Kappenkörper und eine integral materialeinheitlich mit dem Kappenkörper ausgebildete Kappendecke aufweist, wobei weiter die Kappendecke bevorzugt als relativ zu dem Kappenkörper bewegbarer Kappendeckel ausgebildet ist, wobei das Spritzwerkzeug in relativ zueinander verfahrbare erste und zweite Formhälften aufgeteilt ist und wobei in der ersten Formhälfte eine Anspritzdüse ausgebildet ist und in der zweiten Formhälfte Schiebebacken-Werkzeugteile ausgebildet sind.

### Stand der Technik

Kunststoff-Spritzwerkzeuge sowie Verfahren zur Herstellung einer Verschlusskappe in einem solchen Kunststoff-Spritzwerkzeug der in Rede stehenden Art sind bekannt. Diese Werkzeuge und Verfahren finden insbesondere Verwendung zur Herstellung von Kunststoff-Verschlusskappen, wobei weiter derartige Kunststoff-Verschlusskappen insbesondere zum Verschluss von Getränkebehältnissen Verwendung finden. Der Kappenkörper wird dabei im Wesentlichen gebildet durch eine beispielsweise im Wesentlichen kreisringförmige, zylindrisch umlaufende Wandung, welche überdeckt ist von der Kappendecke. Die Kappendecke kann fest mit dieser umlaufenden Wandung beziehungsweise mit dem Kappenkörper verbunden und gegebenenfalls integral materialeinheitlich mit dem Kappenkörper ausgebildet sein, weiter beispielsweise zur Ausbildung einer Schraubkappe. Auch kann die Kappendecke als Kappendeckel relativ zu dem Kappenkörper bewegbar ausgebildet sein, insbesondere um eine quer zu einer Kappenlängsachse, um welche Kappenlängsachse bevorzugt die Wandung umläuft, vorgesehene Scharnierachse schwenkbewegbar.

Aus der EP 2 052 834 B1 ist eine Kunststoff-Spritzwerkzeug der in Rede stehenden Art bekannt. Dieses weist in der zweiten Formhälfte Schiebebacken-Werkzeugteile auf, die nach Durchführung des Spritzvorgangs zur Herstellung der Kunststoff-Verschlusskappe im Zuge eines Ausstoßvorganges in Ausstoßrichtung und zugleich senkrecht hierzu verlagert werden. Diese Mehrzahl an Schiebebacken-Werkzeugteilen bilden zusammen in Umfangsrichtung eine Gesamt-Spritzkontur, insbesondere die Spritzkontur der zweiten Formhälfte, beispielsweise zur Ausbildung einer Verschlusskappe mit Garantieband.

Vergleichbare Werkzeuge bzw. Verfahren zur Herstellung einer Verschlusskappe in einem Kunststoffspritzwerkzeug sind auch aus der US 2001/ 0015341 A1 und der EP 1 905 566 A1 bekannt. Die Schiebebacken-Werkzeugteile bilden jeweils eine unter sich gleiche Teil-Spritzkontur aus. Das Schiebebackenwerkzeug liegt auch jeweils in einem Längs-Querschnitt nur in einem einheitlichen Flächenbereich an dem Werkzeugkern an.

### Zusammenfassung der Erfindung

Im Hinblick auf den vorbeschriebenen Stand der Technik stellt sich der Erfindung die Aufgabe, ein Kunststoff-Spritzwerkzeug sowie ein Verfahren der in Rede stehenden Art weiter verbessert auszugestalten.

Diese Aufgabe ist hinsichtlich des Kunststoff-Spritzwerkzeuges beim Gegenstand des Anspruches 1 gelöst, bei welchem darauf abgestellt ist, dass in zwei oder mehr Schiebebacken-Werkzeugteilen zueinander unterschiedliche Teil-Spritzkonturen ausgebildet sind, derart, dass einzeln herstellbare und austauschbare Schiebebacken-Werkzeugteile mit einer bestimmten, jedenfalls zu einem weiteren Schiebebacken-Werkzeugteil unterschiedlichen Teil-Spritzkontur ausgebildet sind und dass ein Schiebebacken-Werkzeugteil in der Ausstoßrichtung vor dem Ausstoßen der Verschlusskappe an zwei in der Ausstoßrichtung hintereinander und zueinander beabstandet liegenden Bereichen in einer Anlage an dem Werkzeugkern ist, die sich gemeinsam in einem Querschnitt durch die zweite Formhälfte zeigen, in welchem Querschnitt eine Kappenlängsachse linienartig verläuft.

Diese Aufgabe ist hinsichtlich des Verfahrens zur Herstellung einer Verschlusskappe beim Gegenstand des Anspruches 14 gelöst, wobei darauf abgestellt ist, dass die Mehrzahl der Schiebebacken-Werkzeugteile bezüglich einer Teil-Spritzkontur gleich oder zumindest annähernd gleich ausgebildet sind, während ein Schiebebacken-Werkzeugteil eine zu den weiteren Schiebebacken-Werkzeugteilen unterschiedliche Teil-Spritzkontur aufweist, dass in dem Spritzwerkzeug in einem selben Spritzvorgang der Kappenkörper mit über den Umfang unterschiedlicher Gestaltung in den Schiebebacken-Werkzeugteilen gebildet wird und die Kappendecke in der ersten Formhälfte ausgebildet wird, und dass ein Schiebebacken-Werkzeugteil in der Ausstoßrichtung vor dem Ausstoßen der Verschlusskappe an zwei in der Ausstoßrichtung hintereinander und zueinander beabstandet liegenden Bereichen in einer Anlage an dem Werkzeugkern ist, die sich gemeinsam in einem Querschnitt durch die zweite Formhälfte zeigen, in welchem Querschnitt eine Kappenlängsachse linienartig verläuft.

Zufolge der vorgeschlagenen Lösung sind ein vorteilhaftes Kunststoff-Spritzwerkzeug sowie ein vorteilhaftes Verfahren zur Herstellung einer Verschlusskappe geschaffen. Überraschend wurde gefunden, dass Schiebbacken-Werkzeugteile mit zwei oder mehr in der Ausstoßrichtung hintereinander liegenden Anlagebereichen bezüglich einer Anlage an dem Werkzeugkern durch das Bewegen in einer Schrägrichtung auch dann günstig eine Entformung der Verschlusskappe erreichen lassen, wenn sie zudem mit unterschiedlichen Teil-Spritzkonturen ausgebildet sind. Auch lassen sich mittels eines derartigen Spritzwerkzeugs und/oder Verfahren Verschlusskappen der vorbeschriebenen Art, insbesondere mit einer im Bereich des Kappenkörpers, weiter insbesondere im Bereich der umlaufenden Kappenwandung über den Umfang unterschiedlicher, insbesondere dreidimensionaler Kontur günstig und präzise herstellen. Weiter lassen sich hierdurch Verschlusskappen mit vergleichsweise aufwendigen, gegebenenfalls über den Umfang unterschiedlich dreidimensional strukturierten Kappenkörpern beziehungsweise Kappenwandungen mit weiter gegebenenfalls unterschiedlichen Hinterschneidungen, günstig in demselben Spritzvorgang herstellen. Die einzeln herstellbaren und austauschbaren Schiebebacken-Werkzeugteile sind günstig mit einer bestimmten, jedenfalls zu einem weiteren Schiebebacken-Werkzeugteil unterschiedlichen Teil-Spritzkontur ausgebildet.

Nach Vollendung des Spritzvorganges wird gemäß einer bevorzugten Ausbildung zunächst der Werkzeugkern über einen Verfahrweg von beispielsweise etwa 10 bis 15 mm, weiter beispielsweise etwa 13 mm, in Ausstoßrichtung verlagert, wobei durch die infolge der gegebenen Anlagebereiche sich gegebenenfalls einstellenden Hintergriffbereiche zwischen der gespritzten Verschlusskappe und des den Anlagebereich aufweisenden Schiebebacken-Werkzeugteils dieses Schiebebacken-Werkzeugteils mittels der auf dem Werkzeugkern aufsitzenden Verschlusskappe zumindest über einen Teilweg mitgeschleppt werden. Dabei vollzieht das Schiebebacken-Werkzeugteil überlagernd sowohl eine Bewegung in Ausstoßrichtung als auch eine Bewegung quer zu dieser Ausstoßrichtung, sich zu der Verschlusskappe entfernend, dies weiter bevorzugt entlang einer Schrägfläche. Sind mehrere bis hin zu alle Schiebebacken-Werkzeugteile mit Anlagebereichen an dem Werkzeugkern ausgebildet, können entsprechend auch diese mehreren beziehungsweise alle Schiebebacken-Werkzeugteile über die Verschlusskappe bei der Bewegung des Werkzeugkerns in Ausstoßrichtung in Richtung ihrer, die Verschlusskappe freigebende Stellung mitgeschleppt werden.

Allein über eine solche Schleppverlagerung über die gespritzte Verschlusskappe können die Schiebebacken-Werkzeugteile in eine definierte Verlagerungs-Endstellung bewegt werden. Auch können überlagert, gegebenenfalls zeitgleich oder auch zeitversetzt zu der Linearverlagerung des Werkzeugkerns und der daraus gegebenenfalls resultierenden Schleppverlagerung über die Verschlusskappe die Schiebebacken-Werkzeugteile über mechanische Mittel in Richtung auf ihre die Verschlusskappe freigebende Stellung beaufschlagt sein, beispielsweise über pneumatisch oder hydraulisch bewegbare Kolben.

Durch die Anordnung der Schiebebacken-Werkzeugteile in der zweiten Formhälfte lassen sich in der Verschlusskappe, bevorzugt im Bereich des Kappenkörpers beziehungsweise der Kappenwandung, zugleich mit der Ausbildung der Kappendecke Konturen erzielen, die über die in Richtung der Kappenlängsachse betrachtete Kappenhöhe auch mehrere Vor- und Rücksprünge sowie in Ausstoßrichtung der hergestellten Verschlusskappe betrachtete hinterschnittene Bereiche aufweisen können. Dies ist insbesondere erreicht durch die Verschiebebewegung der Schiebebacken-Werkzeugteile im Zuge des Öffnens und bevorzugt damit einhergehendem Ausstoßen der gespritzten Verschlusskappe. Beispielsweise ergibt sich ein trichterartiges Öffnen der zweiten Formhälfte zufolge Verlagerung der Schiebebacken-Werkzeugteile in Ausstoßrichtung und in eine Richtung senkrecht zu dieser Ausstoßrichtung.

Die Teil-Spritzkontur eines Schiebebacken-Werkzeugteils, gegebenenfalls aber auch mehrerer Schiebebacken-Werkzeugteile bis hin zu allen Schiebebacken-Werkzeugteilen, ist so ausgebildet, dass vor Durchführung des Spritzvorganges, bei geschlossenen Formhälften des Spritzwerkzeugs, Bereiche der Teil-Spritzkontur an dem Werkzeugkern anliegen. Es können hierdurch in Ausstoßrichtung, somit mit Bezug auf eine fertiggestellte Verschlusskappe in Kappenlängsachse betrachtet, zwei oder mehr zueinander beabstandete Anlagebereiche der Teil-Spritzkontur an dem Werkzeugkern gegeben sein. In diesen Anlagebereichen ergeben sich an der fertiggestellten Verschlusskappe kunststofffreie Bereiche, beispielsweise schlitz-oder linienartige Durchbrechungen in dem Kappenkörper, weiter beispielsweise zur Ausbildung eines vorteilhaften Garantiebandes mit einem Verbindungsband zwischen dem Garantieband und dem weiteren Teil der Verschlusskappe, sodass das Garantieband auch im abgetrennten Zustand verliersicher halterbar ist, oder auch weiter beispielsweise zur Ausbildung einer Scharnierausbildung, weiter beispielsweise einer sogenannten Schmetterlings-Scharnier-Ausbildung.

Die in Ausstoßrichtung beabstandeten Anlagebereiche zeigen sich gemeinsam in einem Querschnitt durch die zweite Formhälfte, in welchem Querschnitt sich eine linienartige Ausstoßrichtung ergibt, beziehungsweise, mit Bezug auf die herzustellende Verschlusskappe, eine Kappenlängsachse linienartig verläuft. Auch können die Anlagebereiche einer Teil-Spritzkontur oder zweier übergreifender Teil-Spritzkonturen in Ausstoßrichtung wie auch darüber hinaus in Umfangsrichtung zueinander beabstandet vorgesehen sein, so dass sich diese in Achsrichtung beabstandeten Anlagebereiche nicht zwingend in einem vorbeschriebenen Querschnitt darstellen.

Die Gesamt-Spritzkontur für den Kappenkörper oder auch nur eines Teilabschnitts des Kappenkörpers, weiter insbesondere gegebenenfalls eines Teilabschnitts der umlaufenden Kappenwandung, kann, wie auch bevorzugt, über den Umfang betrachtet bei einer Aufteilung auf zwei oder mehr Schiebebacken-Werkzeugteile unterschiedlich gestaltet sein. Entsprechend können zugewandt der herzustellenden Verschlusskappe an den einzelnen Schiebebacken-Werkzeugteilen unterschiedliche Teil-Spritzkonturen vorgesehen sein, die insgesamt zusammengefasst die Gesamt-Spritzkontur des Kappenkörpers ausbilden.

Bei einer Mehrzahl von Schiebebacken-Werkzeugteilen in der zweiten Formhälfte, beispielsweise zwei oder mehr, weiter beispielsweise bis hin zu fünf, sechs oder mehr, bevorzugt vier Schiebebacken-Werkzeugteilen, kann gemäß einer möglichen Ausgestaltung eine Mehrzahl von Schiebebacken-Werkzeugteilen bezüglich der vorbeschriebenen Teil-Spritzkontur gleich oder zumindest annähernd gleich ausgebildet sein, während ein Schiebebacken-Werkzeugteil eine zu den weiteren Schiebebacken-Werkzeugteilen unterschiedliche Teil-Spritzkontur aufweist. Auch können alle Schiebebacken-Werkzeugteile diesbezüglich unterschiedlich ausgebildet sein.

So können bei einer bevorzugten Anordnung von vier Schiebebacken-Werkzeugteilen beispielsweise zwei oder drei Schiebebacken-Werkzeugteile hinsichtlich der jeweiligen Teil-Spritzkontur gleich oder annähernd gleich ausgebildet sein und zwei oder ein Schiebebacken-Werkzeugteil diesen gegenüber unterschiedlich.

Darüber hinaus lassen sich durch das vorgeschlagene Kunststoff-Spritzwerkzeug und dem weiter vorgeschlagenen Verfahren, beispielsweise Verschlusskappen mit hinterschnittenen Bereichen im Bereich des Kappenkörpers auf unterschiedlichen Ebenen quer zur Ausstoßrichtung erzielen.

Gemäß einer möglichen Ausgestaltung kann die Teil-Spritzkontur eine Gelenkausbildung ausformen, die sowohl an dem Kappenkörper als auch an der Kappendecke angebunden ist und vollständig in einer oder mehreren Teil-Spritzkonturen ausgebildet ist. Die Kontur der Gelenkausbildung kann sich dabei gemäß einer möglichen Ausführungsform allein in einem Schiebebacken-Werkzeugteil ausbilden, entsprechend allein durch dessen Teil-Spritzkontur gegeben sein. Alternativ kann sich die Kontur der Gelenkausbildung auch beispielsweise über zwei in Umfangsrichtung aufeinanderfolgende Schiebebacken-Werkzeugteile und entsprechend eine bevorzugt im Wesentlichen vertikale Teilungsebene zwischen diesen beiden Schiebebacken-Werkzeugteilen übergreifend erstrecken.

Bevorzugt ist weiter die Gelenkausbildung insgesamt allein durch die Teil-Spritzkontur des einen oder der mehreren Schiebebacken-Werkzeugteile gegeben. Alternativ kann die Gelenkausbildung über einen Teilbereich auch in der die Anspritzdüse aufweisenden ersten Formhälfte gegeben sein. Ein Teilbereich der Gelenkausbildung in der ersten Formhälfte ist dabei bevorzugt in der Entformungs- beziehungsweise Ausstoßrichtung hinterschneidungsfrei und/oder nur mit in Richtung zu der zweiten Formhälfte sich erstreckenden Strukturen gebildet, die weiter sich lediglich in dieser Richtung radial erweiternd ausgebildet sein können, um auch diesbezüglich eine günstige Entformung zu ermöglichen.

Durch entsprechende Ausgestaltung der Schiebebacken-Werkzeugteile, insbesondere deren Teil-Spritzkontur, können beispielsweise sogenannte Schnapp-Scharniere oder auch Schmetterlings-Scharniere, weiter beispielsweise Scharniere mit trapezoidalen Elementen, günstig und präzise an der Verschlusskappe ausgebildet werden. Dabei kann sich weiter im Bereich der scharnierartigen Gelenkausbildung eine bevorzugt quer zur Ausstoßrichtung verlaufende Trennebene zwischen dem Kappenkörper und der dabei als Kappendeckel ausgebildeten Kappendecke ergeben, wobei über die scharnierartige Gelenkausbildung die integrale materialeinheitliche Ausgestaltung der Verschlusskappe gegeben ist. Die Trennebene kann auch in dem unterhalb der Kappendecke befindlichen Teil des Kappenkörpers gegeben sein.

Darüber hinaus lässt sich zufolge der vorgeschlagenen Lösung in dem Kunststoff-Spritzwerkzeug eine derartige Verschlusskappe mit einem über eine Gelenkausbildung abschwenkbarem Kappendeckel in vorteilhafter Weise auch in der Kappen-Verschlussstellung herstellen.

Alternativ oder auch kombinativ zu der vorbeschriebenen möglichen weiteren Ausgestaltung des Kunststoff-Spritzwerkzeugs kann gemäß einer weiteren Lösung vorgesehen sein, dass die Verschlusskappe ein Garantieband aufweist und dass die Spritzkontur für das Garantieband vollständig in der Gesamt-Spritzkontur des Kappenkörpers ausgebildet ist. Ein solches Garantieband ist auch bekannt als Originalitätssicherung, beispielsweise bei sogenannten Schraub-Verschlusskappen. Bei einem ersten Abschrauben der Verschlusskappe von dem verschlossenen Behältnis wird das Garantieband ab- oder eingerissen, sodass die Erstbenutzung kenntlich gemacht ist. Auch kann ein solches Garantieband bei Verschlusskappen mit abschwenkbarem Kappendeckel als Abreißband ausgebildet sein.

Ein solches Garantieband kann, beispielsweise über den Umfang betrachtet, über einzelne, abreißbare Stege an dem Kappenkörper beziehungsweise der Kappenwandung und/oder an dem Kappendeckel angebunden sein. Auch kann über den Umfang betrachtet das Garantieband in einem Abschnitt beispielsweise eine Handhabe aufweisen, zum manuellen vollständigen oder partiellen Abreißen und Entfernen des Garantiebands.

Die sich auch bei einem solchen Garantieband in Verbindung mit dem Kappenkörper einstellenden, in Ausstoßrichtung der hergestellten Verschlusskappe betrachteten Hinterschnittbereiche sowie Vor- und Rücksprungbereiche sind durch die vorgeschlagene Ausgestaltung der zweiten Formhälfte mit Schiebebacken-Werkzeugteilen günstig und präzise herstellbar.

In weiterer Ausgestaltung können übergreifend über zwei Schiebebacken-Werkzeugteile zwei übereinander befindliche, über eine Umfangswinkel beispielsweise von 20 Grad oder mehr bis hin zu einem Umfangswert von beispielsweise 180 Grad oder mehr sich erstreckende, durchgehende Anlagebereiche der Schiebebacken-Werkzeugteile vorliegen, die zwischen sich ein Band der Verschlusskappe bilden, das einerends an dem Kappenkörper und anderenends an dem Kappendeckel angebunden ist. Zufolge einer solchen vorteilhaften Ausbildung zweier in Umfangsrichtung benachbarter Teil-Spritzkonturen der Schiebebacken-Werkzeugteile kann eine herzustellende Verschlusskappe beispielsweise mit einem oder mehreren, insbesondere zwei lassoartigen Fangbändern versehen werden, zur dauerhaften Anbindung der Kappendecke an dem, im Wesentlichen einen Fangring bildenden Kappenkörper oder eines Garantiebandes an dem Kappendeckel.

Dabei können sich die Anlagebereiche beispielsweise über einen Umfangswinkel von etwa 20 Grad bis hin zu etwa 60 Grad oder mehr, weiter beispielsweise bis hin zu etwa 75 Grad erstrecken.

In Umfangsrichtung betrachtet können auch beispielsweise zwei derartiger Anlageausbildungen gegeben sein, zur Ausbildung von zwei Bändern.

Zur Ausbildung einer stegartigen Anbindung des Bandes an dem Kappenkörper beziehungsweise an der Kappendecke sowie zur weiteren umfangsmäßigen Ausbildung eines gegebenenfalls linienartigen Trennbereichs zwischen Kappendecke und Kappenkörper kann sich in Umfangsrichtung ein sich über die axiale Höhe der Verschlusskappe beziehungsweise ein in Ausstoßrichtung wechselnder Verlauf des jeweiligen Anlagebereiches ergeben.

So können sich weiter unterschiedliche Teil-Spritzkonturen über den Umfang zu einer in Axialrichtung ansteigenden und/oder abfallenden Bandkontur, die in einer Breitenrichtung der Bandkontur von entsprechend die Bandkontur verlaufenden Anlagerippen begrenzt ist, ergänzen.

Der Ausstoßer kann in weiterer Ausgestaltung im Hinblick auf die Verschlusskappe vor dem Ausstoßen von den Schiebebacken-Werkzeugteilen axial überdeckt sein. Der Ausstoßer bildet bei einer solchen Ausgestaltung bevorzugt keinen (bodenseitigen) Teilbereich der Spritzkontur in der zweiten Formhälfte. Vielmehr ist dieser, den Bereich des unteren frei umlaufenden Randes des Kappenkörpers bildende Formabschnitt (auch) durch die Teil-Spritzkonturen der Schiebebacken-Werkzeugteile gebildet. Diese reichen mit jeweils einem den unteren freien Rand des Kappenkörpers unterfangenden Anlagebereich in radialer Richtung bis an den Werkzeugkern. Der Ausstoßer liegt zu Beginn des Ausstoßvorgangs in Ausstoßrichtung durch den den Kappenkörper unterfangenden Backenbereich distanziert zu der Verschlusskappe. Zum Ausstoßen der Verschlusskappe erfolgt bevorzugt voreilend beziehungsweise synchronisiert zur linearen Verlagerung des Ausstoßers eine Verlagerung der Schiebebacken-Werkzeugteile in und senkrecht zur Ausstoßrichtung, womit ein Weg für den Ausstoßer zur entsprechenden Ausstoßbeaufschlagung der Verschlusskappe im Bereich dessen unteren Randabschnitts freigegeben wird.

Weiter kann zu Beginn eines Ausstoßvorgangs mittels der Schiebebacken-Werkzeugteile und der Verschlusskappe der Werkzeugkern in eine Vorlagestellung verfahren. Ein solches Verfahren des Werkzeugkerns in die Vorlagestellung kann allein oder teilweise zufolge eines Mitschleppens über den zu Beginn des Ausstoßvorgangs noch gegebenen Hintergriff zwischen den Teil-Spritzkonturen der Schiebebacken-Werkzeugteile und der gespritzten Verschlusskappe gegeben sein. Auch kann eine mechanische Kopplung der Bewegung der Schiebebacken-Werkzeugteile in und senkrecht zu der Ausstoßrichtung und der Verfahrbewegung des Werkzeugkerns in die Vorlagestellung gegeben sein.

Die zweite Formhälfte kann ein, ein Ringteil aufweisen, das bevorzugt einen etwa quadratischen Grundriss besitzt. Die Schiebebacken-Werkzeugteile können in dem Ringteil innenseitig beweglich aufgenommen sind. Das Ringteil kann, wie auch bevorzugt, eine Führung für jedes einzelne Schiebebacken-Werkzeugteil anbieten, beispielsweise in Art einer Nut-Feder-Führung.

Dabei kann weiter das Ringteil an einem Werkzeug-Aufnahmeteil befestigt sein. Es kann sich um eine reversible Befestigung handeln, wobei das Werkzeug-Aufnahmeteil bevorzugt ein starres, weiter bevorzugt nicht verlagerbares Vorrichtungsteil ist. Über die Befestigung des Ringteils sind die Schiebebacken-Werkzeugteile mittelbar über die zweite Formhälfte beziehungsweise ist die zweite Formhälfte unmittelbar in der Vorrichtung zur Herstellung eines Spritzlings positionierbar.

Um eine exakte Ausrichtung der beiden Formhälften sowie bevorzugt der Schiebebacken-Werkzeugteile zu der ersten Formhälfte zu erreichen, kann gemäß einer bevorzugten Ausgestaltung das Ringteil in einer Ebene senkrecht zur Ausstoßrichtung bewegbar an dem Werkzeug-Aufnahmeteil befestigt sein. Es ergibt sich bevorzugt quasi eine schwimmende Lagerung des Ringteils und somit der an dem Ringteil geführten Schiebebacken-Werkzeugteile beziehungsweise der mit dem Ringteil verbundenen zweiten Formhälfte, sodass sich vor Durchführung eines Spritzvorgangs, gegebenenfalls, wie auch bevorzugt, aber auch im Zuge des Spritzvorganges eine exakte Ausrichtung der Formhälften in einer Richtung quer zur Ausstoßrichtung beziehungsweise in einer Richtung quer zur Fügerichtung der Formhälften erreichen lassen kann.

Eine exakte Ausrichtung der Formhälften zueinander ist insbesondere bei einem Trennungssprung zwischen den Formhälften innerhalb des Kappenkörpers der herzustellenden Verschlusskappe erforderlich, was durch die vorbeschriebene schwimmende Lagerung des Ringteils und hierüber der Schiebebacken-Werkzeugteile oder der zweiten Formhälfte insgesamt erreicht werden kann.

Die vorbeschriebene Beweglichkeit des Ringteils quer zur Ausstoßrichtung ist bevorzugt begrenzt, insbesondere anschlagbegrenzt. So kann weiter eine diesbezügliche Beweglichkeit des Ringteils in Richtung einer sich auf eine in Ausstoßrichtung verlaufende Mittelachse der Formhälfte ausgerichteten Radialen bevorzugt im einstelligen Millimeterbereich gegeben sein, so beispielsweise über einen Bereich von beispielsweise 0,1 bis 0,5 mm bis hin zu beispielsweise 1 oder 2, weiter bis hin zu beispielsweise 3 mm oder mehr, beispielsweise bis hin zu 5 mm.

So kann weiter ein Halterungselement für das Ringteil vorgesehen sein, das unter Zwischenschaltung einer Hülse an dem Werkzeug-Aufnahmeteil befestigt ist, wobei eine Durchgangsbohrung des Ringteils, durch welche sich das Halterungselement mit der Hülse erstreckt, zu der Hülse einen Freiraum belässt. Über das Halterungselement ist das Ringteil bevorzugt in Ausstoßrichtung an dem Werkzeug-Aufnahmeteil gehaltert, während weiter das Halterungselement unmittelbar oder mittelbar über die Hülse ein Anschlagelement für das Ringteil bildet, um eine begrenzte Beweglichkeit des Ringteils senkrecht zur Ausstoßrichtung zu ermöglichen. Das Maß der Beweglichkeit ist dabei insbesondere und bevorzugt durch das Abstandsmaß zwischen der Bohrungswandung des Ringteils und der umlaufenden Hülsenwandung vorgegeben, wobei sich weiter zwischen der Bohrungswandung des Ringteils und der umlaufenden Hülsenwandung bevorzugt ein Ringraum einstellt.

Das Halterungselement kann in weiterer Ausgestaltung eine Schraube sein, die in eine angepasste Gewindebohrung des Werkzeug-Aufnahmeteils einschraubbar ist. Der Schraubenschaft kann dabei die bevorzugt vorgesehene Hülse durchsetzen. Über den Schraubenkopf ist eine Sicherung des Ringteils insbesondere in Ausstoßrichtung gegeben.

Die Befestigung des Ringteils kann darüber hinaus auch durch ein Halterungselement erfolgen, welches beispielsweise als Bolzen mit einem durch Drehen in Wirkung bringbaren Vorsprung ausgebildet sein kann. Es kann hierdurch eine Halterung beispielsweise nach dem Schlüssel-Schlüsselloch-Prinzip gegeben sein, bei welchem ein im Wesentlichen radial zu dem Bolzen abragender Vorsprung, beispielsweise in Art eines Schlüsselbarts, durch Drehen um die Bolzenlängsachse in eine Hintergriffstellung zu einer angepassten Öffnung in dem Werkzeug-Aufnahmeteil verbracht werden kann. In dieser Hintergriffbeziehungsweise Riegelstellung ist das Ringteil an dem Werkzeug-Aufnahmeteil festgelegt. Dabei handelt es sich bevorzugt um eine gewindefreie Befestigung des Ringteils, weiter beispielsweise in Art einer Bajonettverriegelung oder weiter beispielsweise in Art eines Schnellspanners.

Der Bolzen kann zur Ermöglichung der vorbeschriebenen schwimmenden Lagerung des Ringteils die erwähnte Hülse durchsetzen.

Zufolge dieser weiter vorgeschlagenen Ausgestaltung ergibt sich eine günstige und schnelle Montage sowie Demontage des Ringteils beziehungsweise der Formhälfte.

Die vorgeschlagene Befestigung des Ringteils beziehungsweise der Formhälfte, insbesondere die gewindefreie Befestigung, ist auch allein und für sich von Bedeutung, entsprechend auch unabhängig von den weiteren erfindungsgemäßen Merkmalen des Kunststoff-Spritzwerkzeugs zu betrachten.

Sowohl im Zusammenhang mit den vorbeschriebenen Merkmalen als auch allein für sich betrachtet von Bedeutung kann eine weitere Ausgestaltung sein, bei welcher die Formhälften einen oder mehrere Vorsprünge und Ausnehmungen aufweisen, die im Zuge des Zusammenfahrens der Formhälften eine Ausrichtung relativ zueinander bewirken. Dabei können die Vorsprünge gemäß einer möglichen Ausgestaltung allein der einen Formhälfte zugeordnet sein und die Ausnehmungen allein der anderen Formhälfte. Auch ist diesbezüglich möglich, jede Formhälfte sowohl mit Vorsprüngen als auch mit Ausnehmungen auszustatten, die entsprechend mit Ausnehmungen und Vorsprüngen der anderen Formhälfte zentrierend zusammenwirken können.

Die Vorsprünge können beispielsweise zapfenartig oder stegartig mit kreisrunden oder auch mehreckigen, beispielsweise viereckigem Grundriss, ausgebildet sein.

Für die so gegebene formschlüssige Zusammenwirkung der Formhälften zur exakten Ausrichtung der Formhälften zueinander bietet sich in vorteilhafter Weise die vorbeschriebene schwimmende Lagerung des Ringteils beziehungsweise der zweiten Formhälfte an.

### Kurze Beschreibung der Zeichnungen

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Die Zeichnung zeigt:
- Fig. 1: das Kunststoff-Spritzwerkzeug in perspektivischer Darstellung, betreffend eine erste Ausführungsform;
- Fig. 2: die Unteransicht gegen das Spritzwerkzeug unter Fortlassung eines Werkzeugkerns;
- Fig. 3: den Schnitt gemäß der Linie III-III in Figur 2 mit Werkzeugkern;
- Fig. 4: die Vergrößerung des Bereichs IV in Figur 3;
- Fig. 5: eine der Figur 2 im Wesentlichen entsprechende Schnittdarstellung, die Ausstoßstellung betreffend;
- Fig. 6: in einer schematischen Darstellung die Schiebebacken-Werkzeugteile der zweiten Formhälfte;
- Fig. 7: eine beispielsweise mit dem Spritzwerkzeug der ersten Ausführungsform hergestellte Verschlusskappe in perspektivischer Darstellung;
- Fig. 8: die Herausvergrößerung des Bereichs VIII in Figur 3;
- Fig. 9: eine der Figur 8 entsprechende Darstellung, betreffend eine alternative Ausgestaltung;
- Fig. 10: eine perspektivische Draufsicht auf die zweite Formhälfte des Spritzwerkzeugs gemäß Figur 1 mit Schiebebacken-Werkzeugteilen;
- Fig. 11: bis
- Fig. 15: der Figur 10 entsprechende Darstellungen, jedoch alternative Ausführungsformen betreffend;
- Fig. 16: eine Darstellung gemäß Figur 10, jedoch mit alternativen Schiebebacken-Werkzeugteilen;
- Fig. 17: eine alternative Verschlusskappe in perspektivischer Darstellung, beispielsweise hergestellt unter Nutzung von Schiebebacken-Werkzeugteilen gemäß Figur 16;
- Fig. 18: eine Schnittdarstellung durch Formhälften, zur Herstellung einer Verschlusskappe gemäß Figur 17, welche Schnittdarstellung sich entlang einer Schnittlinie XVIII-XVIII durch eine solche in diesen Formhälften herzustellende Verschlusskappe ergibt;
- Fig. 19: eine der Figur 17 entsprechende Darstellung, betreffend eine weitere Ausführungsform der Verschlusskappe mit Gelenkausbildung;
- Fig. 20: eine perspektivische Draufsicht auf eine zweite Formhälfte in einer weiteren Ausführungsform, mit in Umfangsrichtung unterschiedlich großen Schiebebacken-Werkzeugteilen;
- Fig. 21: in perspektivischer Darstellung eine unter Nutzung der zweiten Formhälfte gemäß Figur 20 hergestellte Verschlusskappe;
- Fig. 22: eine Verschlusskappe in einer weiteren Ausführungsform;
- Fig. 23: eine Schnittdarstellung durch Formhälften, zur Herstellung einer Verschlusskappe gemäß Figur 22, welche Schnittdarstellung sich entlang einer Schnittlinie XXIII-XXIII durch eine solche in diesen Formhälften herzustellende Verschlusskappe ergibt;
- Fig. 24: die Vergrößerung des Bereichs XXIV in Figur 23;
- Fig. 25: eine weitere Verschlusskappe in perspektivischer Darstellung;
- Fig. 26: eine Schnittdarstellung durch Formhälften gemäß Figur 23, welche Schnittdarstellung sich entlang einer Schnittlinie XXVIXXVI durch eine solche in diesen Formhälften herzustellende Verschlusskappe gemäß Figur 25 ergibt;
- Fig. 27: die Vergrößerung des Bereichs XXVII in Figur 26;
- Fig. 28: eine der Figur 27 entsprechende Darstellung, eine alternative Ausführungsform betreffend;
- Fig. 29: eine perspektivische Darstellung einer Verschlusskappe mit Garantieband, eine weitere Ausführungsform betreffend;
- Fig. 30: die Verschlusskappe gemäß Figur 29 nach umfangsmäßiger Trennung des Kappenkörpers von dem Garantieband, unter Beibehaltung einer Anbindung des Kappenkörpers an dem Garantieband über ein vorgesehenes Fangband;
- Fig. 31: eine der Figur 30 entsprechende Darstellung, eine alternative Ausgestaltung der Verschlusskappe betreffend;
- Fig. 32: in perspektivischer Darstellung eine weitere Ausführungsform einer Verschlusskappe mit Garantieband;
- Fig. 33: eine der Figur 30 im Wesentlichen entsprechende Darstellung, jedoch betreffend die Verschlusskappe gemäß Figur 32;
- Fig. 34: eine der Figur 33 entsprechende Darstellung, eine alternative Ausgestaltung der Verschlusskappe betreffend.

### Beschreibung der Ausführungsformen

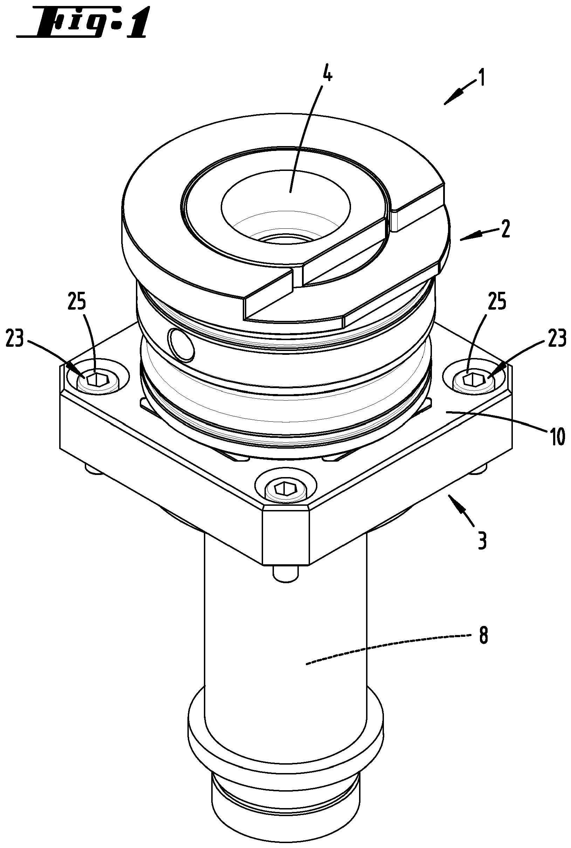

Dargestellt und beschrieben ist, zunächst mit Bezug zu Figur 1, ein Kunststoff-Spritzwerkzeug 1, welches in den Darstellungen teilweise lediglich schematisch gezeigt ist.

Das Kunststoff-Spritzwerkzeug 1 weist im Wesentlichen zwei Formhälften auf, eine erste, in den Darstellungen obere, Formhälfte 2 und eine, in den Darstellungen untere, zweite Formhälfte 3.

Eine der Formhälften kann relativ zu der anderen Formhälfte entlang einer geometrischen Verfahrachse x verlagerbar sein.

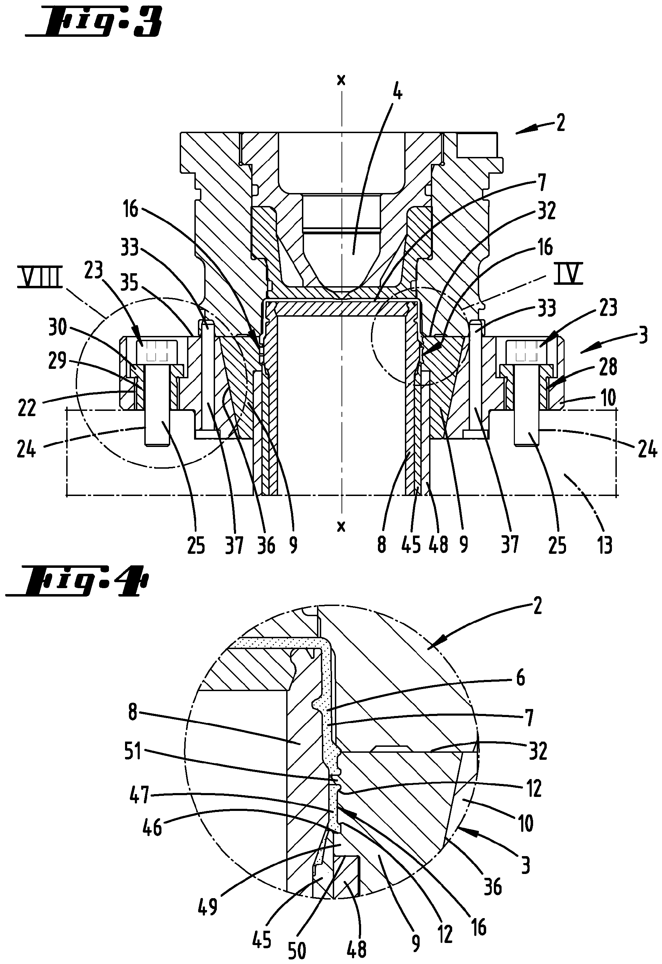

In der ersten Formhälfte 2 ist bevorzugt eine Anspritzdüse 4 vorgesehen, über welche in einer Formhälften-Schließstellung gemäß Figur 3 zur Herstellung eines Spritzteiles beispielsweise in Form einer Verschlusskappe 5 eine Kunststoffmasse 6 in eine sich zwischen den Formhälften 2 und 3 ergebende Kavität 7 eingebracht wird. Die Kavität 7 kann radial innen durch einen Werkzeugkern 8 der zweiten Formhälfte 3 begrenzt sein.

Die Kavität 7 kann weiter, insbesondere zur Bildung von Hinterschnittbereichen 12 an der herzustellenden Verschlusskappe 5, durch ein oder mehrere Schiebebacken-Werkzeugteile 9 begrenzt sein. So können mit Bezug zu der Verfahrachse x umfangsmäßig mehrere, beispielsweise vier Schiebebacken-Werkzeugteile 9 vorgesehen sein. Jedes Schiebebacken-Werkzeugteil 9 kann sich dabei in dem der zu begrenzenden Kavität 7 zugewandten Bereich (Teil-Spritzkontur 16) in Umfangsrichtung über einen gleichen Umfangswinkel erstrecken. Im Falle von vier Schiebebacken-Werkzeugteilen also beispielsweise über einen Umfangswinkel von je 90 Grad erstrecken. Auch können diesbezüglich Schiebebacken-Werkzeugteile 9 mit im Bereich der Teil-Spritzkontur 16 unterschiedlichen Umfangswinkeln vorgesehen sein.

Die Außenwandung eines Schiebebacken-Werkzeugteils 9 verläuft gemäß einem Längsschnitt (siehe Figur 3) bevorzugt keilförmig, sich hierbei in Richtung auf die erste Formhälfte 2 erweiternd.

Die Schiebebacken-Werkzeugteile 9 bilden zusammen eine mit Bezug zu der Verfahrachse x umlaufende Gesamt-Spritzkontur der zweiten Formhälfte 3, insbesondere zur Begrenzung der Kavität 7 im Bereich eines Kappenkörpers 14 der herzustellenden Verschlusskappe 5. Dabei kann sich die Gesamt-Spritzkontur der Schiebebacken-Werkzeugteile 9 in Achsrichtung im Wesentlichen über mehr als die Hälfte bis hin zu der gesamten axialen Höhe des die Kappenwandung im Wesentlichen bildenden Kappenkörpers 14 erstrecken. Eine möglicher (oberer), bevorzugt keine Hinterschnittbereiche 12 aufweisender Restabschnitt des Kappenkörpers 14 sowie eine bevorzugt integral materialeinheitlich mit dem Kappenkörper 14 auszubildende Kappendecke 15 finden ihre äußere Gesamt-Spritzkontur bevorzugt in der ersten Formhälfte 2, können aber partiell auch durch die Teil-Spritzkonturen 16 der Schiebebacken-Werkzeugteile 9 mitgebildet sein.

Es kann sich entsprechend ein, gegebenenfalls stufenförmiger, Trennungssprung zwischen den Formhälften im Übergang von Kappenkörper 14 zur Kappendecke 15 oder sogar innerhalb der axialen Erstreckung des Kappenkörpers 14 ergeben.

Teil der unteren, zweiten Formhälfte 3 kann auch ein, den Werkzeugkern 8 im Bereich einer radial äußeren Taillierung des Werkzeugkerns 8 umgebender Formabschnitt 45 sein, beispielsweise zur Ermöglichung der Herstellung eines im Bereich des unteren Randes 46 der Verschlusskappe 5 nach radial innen über die inneren Kappenwandungsfläche vorragenden Abschnitts 47. Dieser Abschnitt 47 kann beispielsweise ein Garantieband bilden.

Weiter ist bevorzugt radial umlaufend zu dem Werkzeugkern 8, dabei den gegebenenfalls vorgesehenen Formabschnitt 45 umgebend, ein im Wesentlichen hülsenartiger Ausstoßer 48 vorgesehen.

Während des Spritzvorganges und vor Beginn des Ausstoßvorganges beispielsweise gemäß der Darstellung in Figur 3 ist der nach oben weisende Rand des Ausstoßers 48 in Axial- beziehungsweise in Ausstoßrichtung r durch einen Anlagebereich 49 des Schiebebacken-Werkzeugteils 9 an dem Werkzeugkern 8 und/oder an dem Formabschnitt 45 distanziert zu dem durch den Ausstoßer 48 zu beaufschlagenden Rand 46 der herzustellenden Verschlusskappe 5 (siehe auch beispielsweise Figur 4).

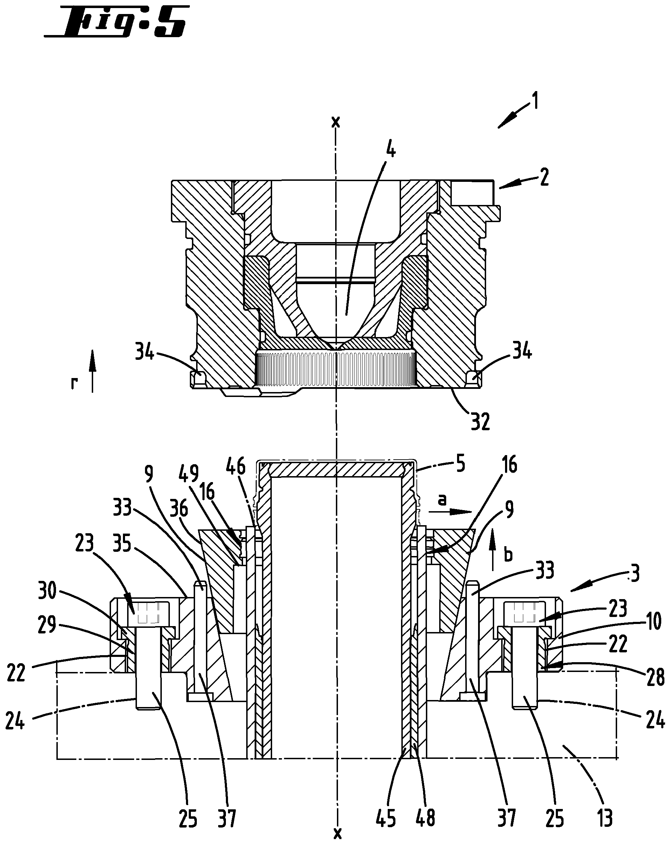

Es kann sich eine Anlagefläche 50 der Schiebebacken-Werkzeugteile 9 für die Stirnfläche des Ausstoßers 48 ergeben, über welche nach dem Spritzvorgang und anschließend eingeleitetem Ausstoßvorgang der Ausstoßer 48 infolge dessen Axialverlagerung in Ausstoßrichtung r die Schiebebacken-Werkzeugteile 9 zunächst mitschleppen kann. Letztere verlagern sich aufgrund der KeilFührung in und senkrecht nach radial außen zur Ausstoßrichtung r, geben dabei den Spritzling (Verschlusskappe 5) sowie den Ausstoßweg für den Ausstoßer 48 frei, so dass dieser unterseitig gegen den Rand 46 der auf dem Werkzeugkern 8 aufsitzenden Verschlusskappe 5, zum Abstoßen derselben vom Werkzeugkern 8, treten kann (siehe Figur 5).

Der Werkzeugkern 8 kann im Zuge der Ausstoßbewegung in eine, wie in Figur 5 dargestellte, Vorstandslage verfahren, während der optional vorgesehene weitere Formabschnitt 45 gegebenenfalls in seiner Ausgangsstellung verbleibt.

Der Werkzeugkern 8 kann in einer Ausgestaltung zunächst über einen linearen Verfahrweg von beispielsweise 10 bis 15 mm, weiter beispielsweise etwa 13mm, in Ausstoßrichtung r vorfahren, wobei sich zufolge eines formschlussartigen Zusammenwirkens von bevorzugt ausgebildeten Trennbereichen 39 der gespritzten Verschlusskappe 5 und von Anlagebereichen 51 der Schiebebacken-Werkzeugteile 9 an dem Werkzeugkern 8 eine Schleppmitnahme der Schiebebacken-Werkzeugteile 9 in Richtung auf ihre Verschlusskappen-Freigabestellung über die hergestellte Verschlusskappe 5 einstellen kann.

Zeitlich versetzt hierzu, gegebenenfalls aber auch zeitgleich hierzu, kann auch eine aktive Verlagerung der Schiebebacken-Werkzeugteile 9 erfolgen, beispielsweise über den vorerwähnten Ausstoßer 48 oder über gesonderte mechanische Beaufschlagungsmittel.

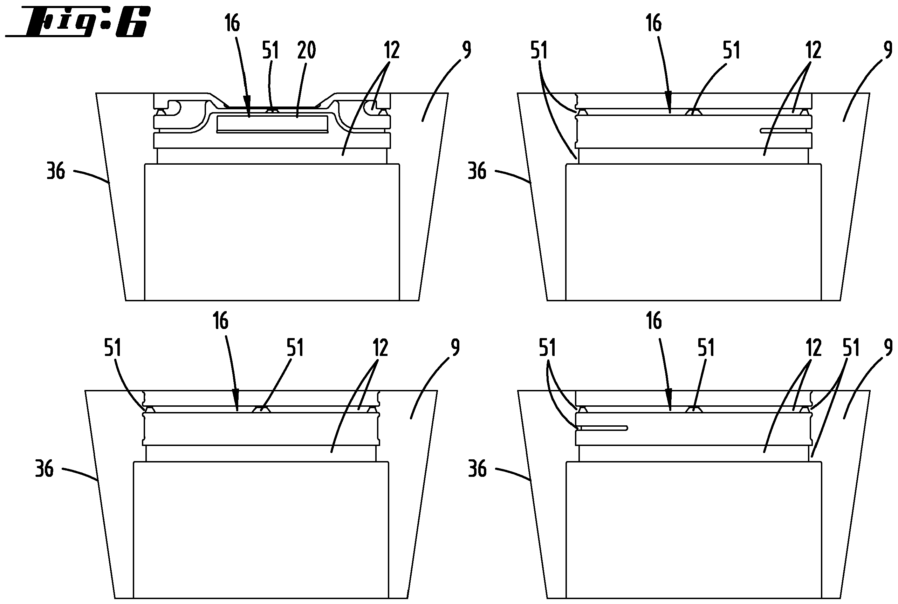

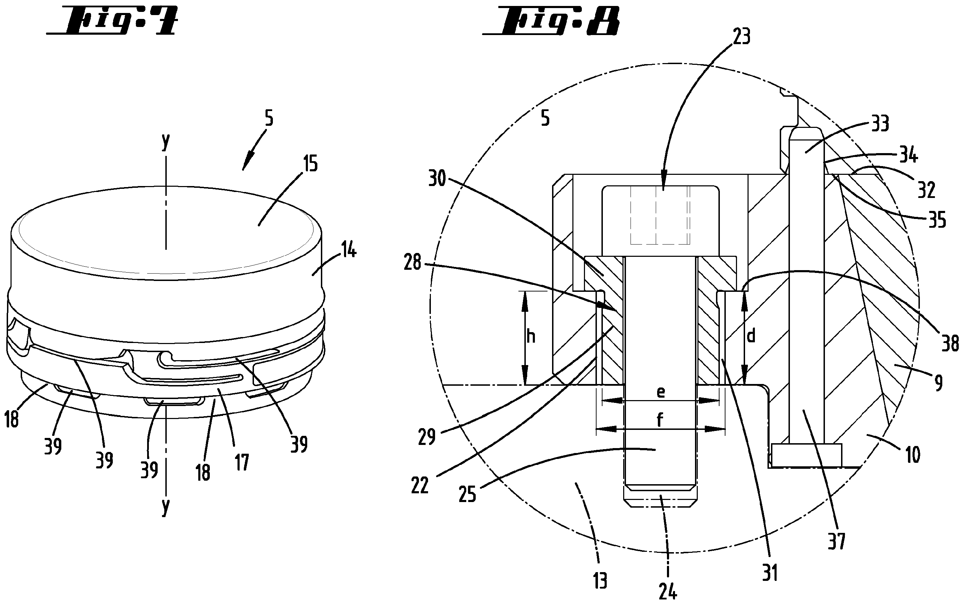

Die Teil-Spritzkonturen 16 der einzelnen Schiebebacken-Werkzeugteile 9 können gleich, aber auch, wie bevorzugt und in Figur 6 schematisch dargestellt, unterschiedlich sein. So kann beispielsweise mittels dieser Teil-Spritzkonturen 16 in den Schiebebacken-Werkzeugen 9 fußseitig des Kappenkörpers 14 ein Garantieband 17 angeformt sein, welches über gegebenenfalls abreißbare Stege 18 an die Wandung des Kappenkörpers 14 angebunden ist (siehe Figur 7).

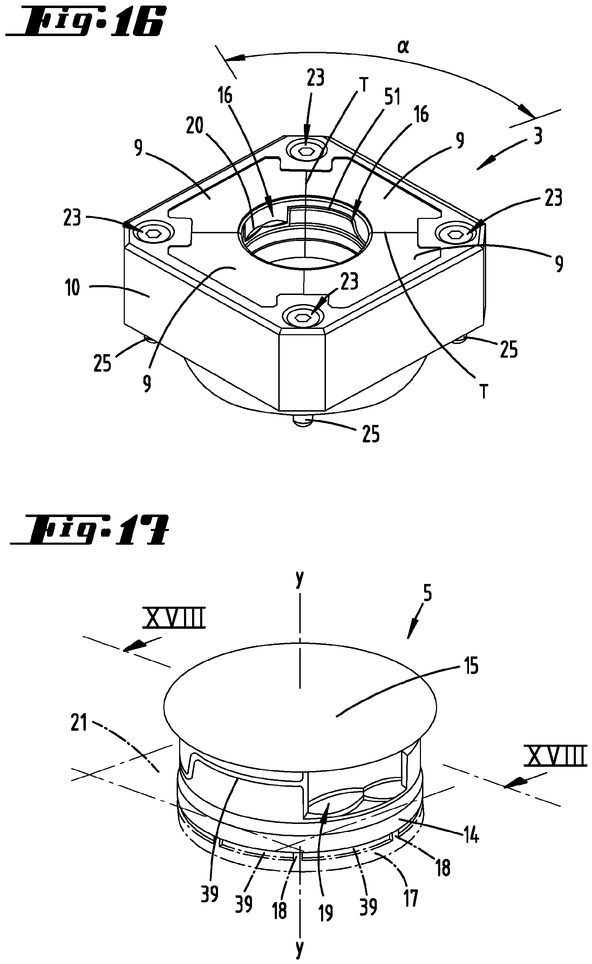

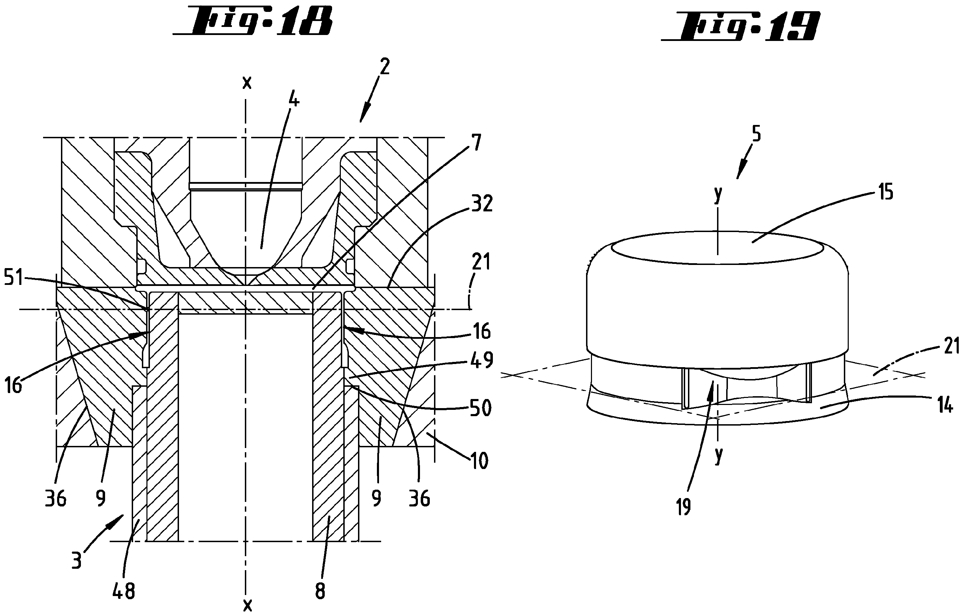

Alternativ können durch die unterschiedlichen Teil-Spritzkonturen 16 der Schiebebacken-Werkzeugteile 9 auch eine Verschlusskappe 5 mit einer relativ zu dem Kappenkörper 14 beweglichen, insbesondere schwenkbeweglichen Kappendecke 15 in Art eines Kappendeckels herstellbar sein. Eine solche Verschlusskappe 5 ist beispielsweise in den Figuren 17 und 19 in unterschiedlichen Ausführungsformen dargestellt.

So kann die Teil-Spritzkontur 16 zumindest eines Schiebebacken-Werkzeugs 9 eine gesonderte Struktur 20 zur Formung einer Gelenkausbildung 19 in dem Kappenkörper 14 aufweisen (vergl. Figur 16). Dabei ist die herzustellende Gelenkausformung 19 so positioniert, dass diese sowohl an der Kappendecke 15 als auch an dem Kappenkörper 14 angebunden ist, wobei sich zwischen Kappendecke 15 und Kappenkörper 14 eine im Wesentlichen quer zur, im Zuge der Herstellung entlang der Verfahrachse x verlaufenden Kappenachse ausgerichtete Trennebene 21 einstellen kann.

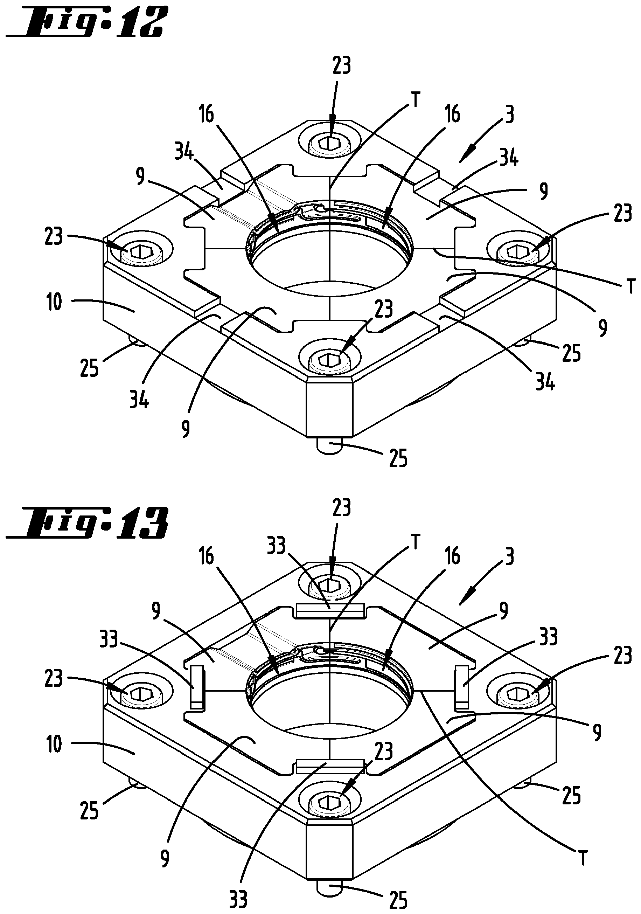

Die gesonderte Struktur 20 kann sich allein und vollständig in einem Schiebebacken-Werkzeugteil 9 abbilden. Alternativ kann sich die gesonderte Struktur 20 aber auch über beispielsweise zwei in Umfangsrichtung aufeinander folgende Schiebebacken-Werkzeugteile 9 erstrecken, hierbei entsprechend eine Teilungsebene T zwischen den Werkzeugteilen 9 überbrückend (vergleiche beispielsweise Figur 12).

Die Schiebebacken-Werkzeugteile 9 beziehungsweise deren Teil-Spritzkonturen 16 können weiter, wie auch bevorzugt, so ausgebildet sein, dass sich an einem Schiebebacken-Werkzeugteil 9 oder auch an zwei oder mehr gegebenenfalls in Umfangsrichtung aneinander anschießenden Schiebebacken-Werkzeugteilen 9 in Ausstoßrichtung r beziehungsweise in Richtung der Verfahrachse x hintereinander liegende und in der vorbeschriebenen Richtung zueinander beabstandete Anlagebereiche 51 ergeben, mit welchen die Schiebebacken-Werkzeugteile 9 beziehungsweise deren Teil-Spritzkonturen 16 während des Spritzvorganges und vor dem Ausstoßvorgang an dem Werkzeugkern 8 anliegen.

In diesen Anlagebereichen 51 ergeben sich an der hergestellten Verschlusskappe 5 in Umfangsrichtung bevorzugt nicht vollständig umlaufende, gegebenenfalls linienartig verlaufende, kunststofffreie Trennbereiche 39, bevorzugt in dem Kappenkörper 14 beziehungsweise zwischen Kappenkörper 14 und Kappendecke 15.

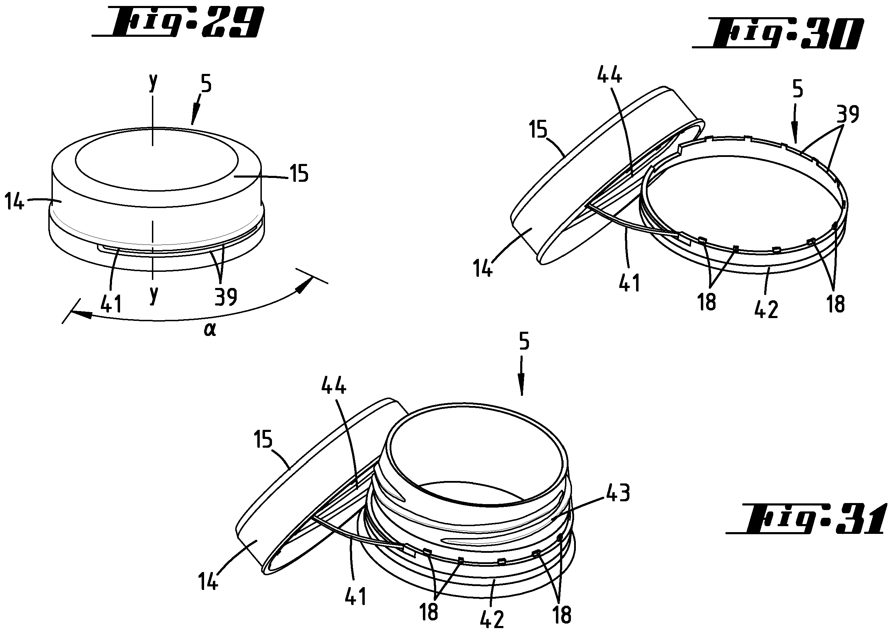

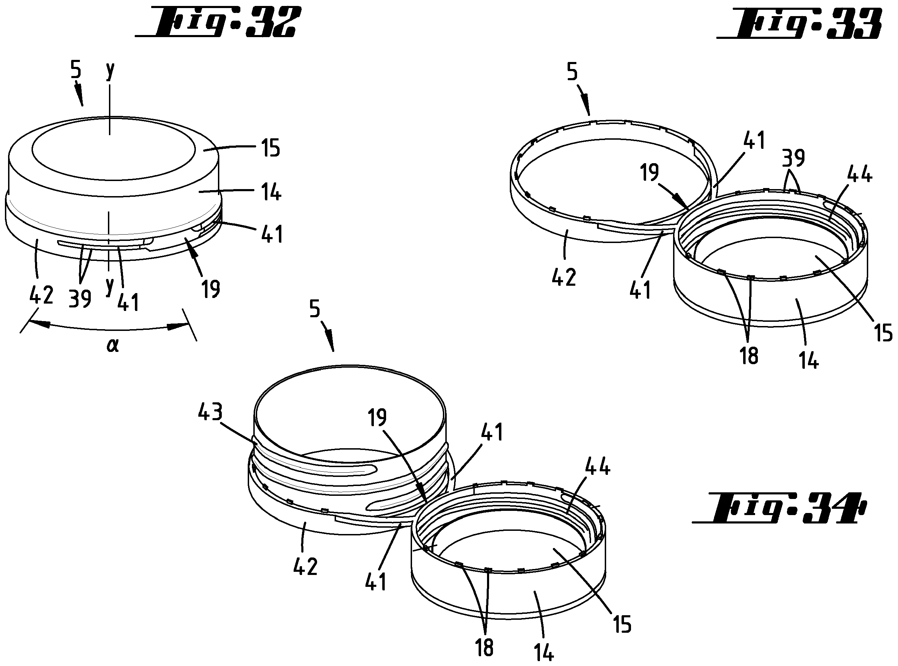

Diese Anlagebereiche 51 können sich in Umfangsrichtung wiederholend jeweils über einen Umfangswinkel a von etwa 3 bis 10 Grad erstrecken, weiter beispielsweise etwa 5 Grad, so beispielsweise zur Ausbildung von Stegen 18, insbesondere Abreißstegen (vergleiche beispielsweise Figuren 30 und 33).

Auch können sich solche Anlagebereiche 51 in Umfangsrichtung - gegebenenfalls eine Teilungsebene T zwischen zwei in Umgangsrichtung aufeinander folgenden Schiebebacken-Werkzeugteilen 9 überbrückend - einen Umfangswinkel a von etwa 20 Grad oder mehr erstrecken, so beispielsweise 30 bis 60 Grad. Eine derartige Ausbildung bietet die vorteilhafte Ausbildung eines Bandes, insbesondere eines Fangbands 41, oder einer Mehrzahl solcher Bänder, welches Band sich zwischen den Anlagebereichen 51 ergibt.

Ein solches Band, beispielsweise Fangband 41 (siehe hierzu auch die nachstehende Beschreibung zu den Ausführungsformen der Figuren 29 bis 34), ist bevorzugt im Bereich eines in Umfangsrichtung betrachteten Endes mit der Kappendecke 15 verbunden und anderenends mit dem Kappenkörper 14, der in diesem Fall einen Fangring 42 bilden kann.

Einer oder mehrere der vorbeschriebenen Anlagebereiche 51 können in Umfangsrichtung betrachtet in einer quer zur Verfahrachse x betrachteten Ebene verlaufend ausgebildet sein. Auch kann ein solcher Anlagebereich 51 in Umfangsrichtung diese Ebene verlassen, beispielsweise zur Bildung eines stufenförmigen Verlaufs eines Trennbereichs 39 in dem Kappenkörper 14.

Figur 17 zeigt einen Verschlusskappe 5 mit einer den Kappenkörper 14 mit der Kappendecke 15 verbindenden Gelenkausbildung 19. Diese ist in dem dargestellten Ausführungsbeispiel in Art eines Butterfly-Gelenks gestaltet. Der linienartige Trennbereich 39 zwischen den aufeinander zu weisenden Randkanten von Kappenkörper 14 und Kappendecke 15 verläuft über den Umfang betrachtet stufenartig, entsprechend in Richtung einer Kappenlängsachse y partiell versetzt.

Dieser versetzte Verlauf zeigt sich in den Teil-Spritzkonturen 16 der Schiebebacken-Werkzeugteile 9 durch einen entsprechend ausgebildeten Anlagebereich 51, insbesondere in drei der insgesamt vier Werkzeugteile. Das vierte Schiebebacken-Werkzeugteil 9 weist bevorzugt die gesonderte Struktur 20 zur Bildung der Gelenkausbildung 19 auf (vergl. Figur 16).

In Figur 18 ist eine Schnittdarstellung der ersten und zweien Formhälften 2 und 3 gezeigt, mit Schiebebacken-Werkzeugteilen 9 zur Herstellung einer Verschlusskappe 19 gemäß Figur 17. Die Schnittebene ist dabei entsprechend der in Figur 17 an der Verschlusskappe 19 angedeuteten Schnittlinie gewählt.

Wie weiter aus der Darstellung in Figur 17 zu erkennen, kann durch entsprechende Anpassung der Schiebebacken-Werkzeugteile 9 eine solche Verschlusskappe 19 auch mit einem Garantieband 17 im Bereich des Kappenkörpers 14 ausgebildet sein, welches unterseitig des Kappenkörpers 14 über umfangsmäßig vereinzelt vorgesehene Stege 18 an dem Kappenkörper 14 angebunden ist. In Umfangsrichtung zwischen den Stegen 18 ergeben sich Trennbereiche 39, die durch entsprechend positionierte Anlagebereiche 51 in den Schiebebacken-Werkzeugteilen 9 freigehalten sind.

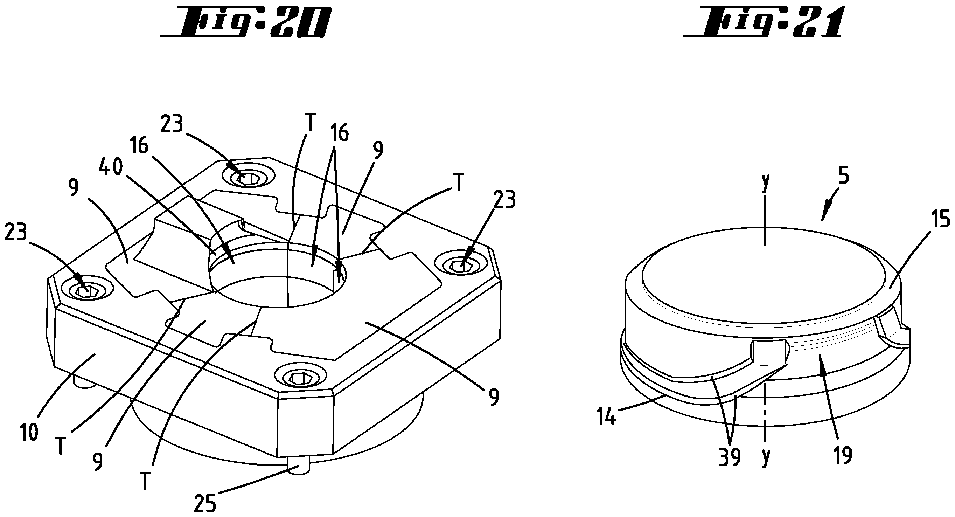

Figur 21 zeigt eine weitere Ausführungsform einer Verschlusskappe 5, mit einer Gelenkausbildung 19, die sich in axialer Richtung und in Richtung auf die Kappendecke 15 über die Trennfläche 32, die den Trennungssprung zwischen den Formhälften 2 und 3 definiert, hinaus erstreckt. Eines der die diesbezüglichen Teil-Spritzkonturen 16 bildenden Schiebebacken-Werkzeugteile 9 ist mit einem in Achsrichtung über die Trennfläche 32 hinausragenden Konturabschnitt 40 versehen.

Der in Umfangsrichtung des Konturabschnittes 40 für die Gelenkausbildung 19 seitliche Bereich ist durch Formabschnitte der oberen, ersten Formhälfte 2 begrenzt. Es ergibt sich eine Verschachtelung der Formhälften über die Trennfläche 32 hinaus.

Wie weiter aus der Darstellung der diesbezüglichen zweiten Formhälfte 3 in Figur 20 zu erkennen, können die einzelnen Schiebebacken-Werkzeugteile 9, insbesondere im Bereich der jeweiligen Teil-Spritzkonturen 16, bevorzugt paarweise, unterschiedliche Umfangserstreckungen aufweisen. So kann beispielsweise das den vorbeschriebenen Konturabschnitt 40 aufweisende Schiebebacken-Werkzeugteil 9, wie auch das bezogen auf die Verfahrachse x diametral gegenüberliegende Schiebebacken-Werkzeugteil 9, eine im Bereich der Teil-Spritzkonturen 16 größere, beispielsweise um etwa das 1,5- bis 2,5-Fache größere Umfangslänge aufweisen, als die in Umfangsrichtung zwischen den vorerwähnten Schiebebacken-Werkzeugteilen 9 angeordneten weiteren Schiebebacken-Werkzeugteile 9.

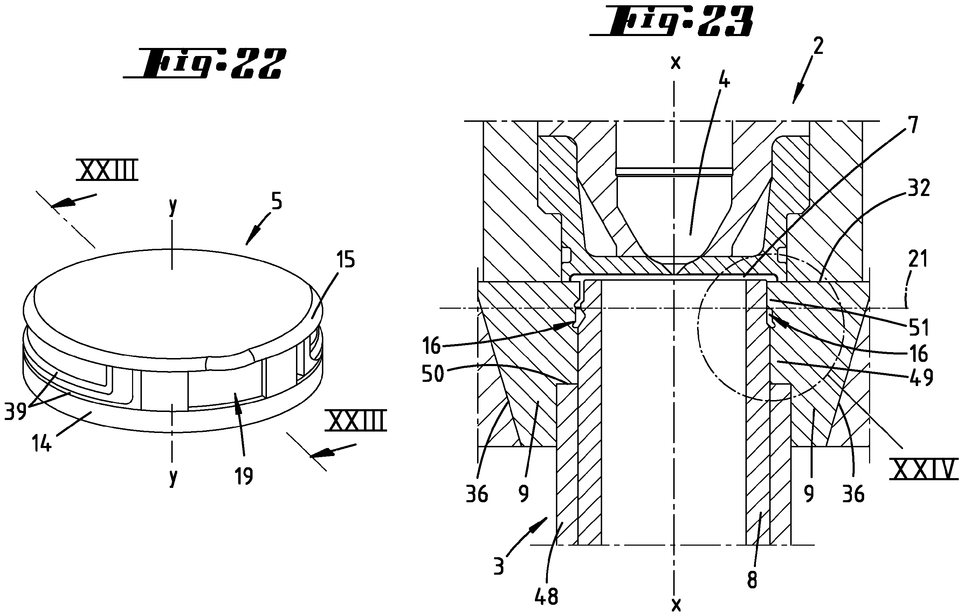

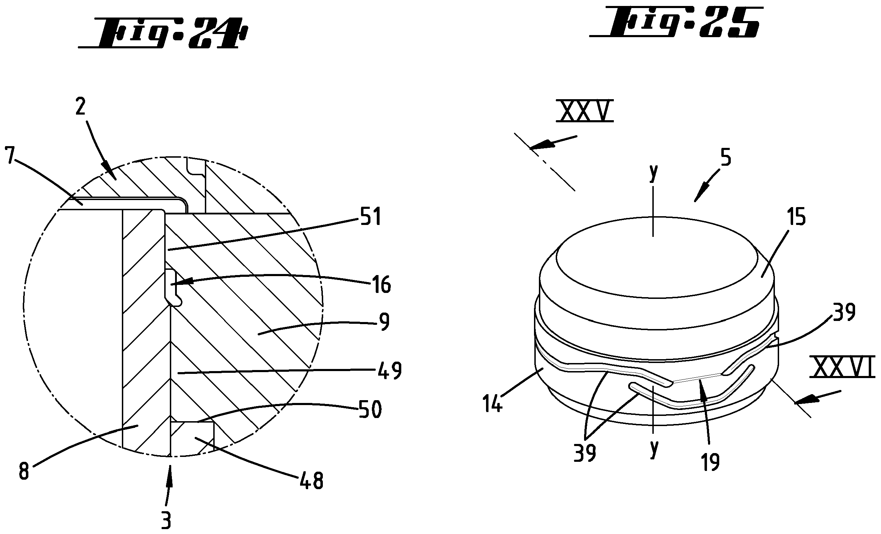

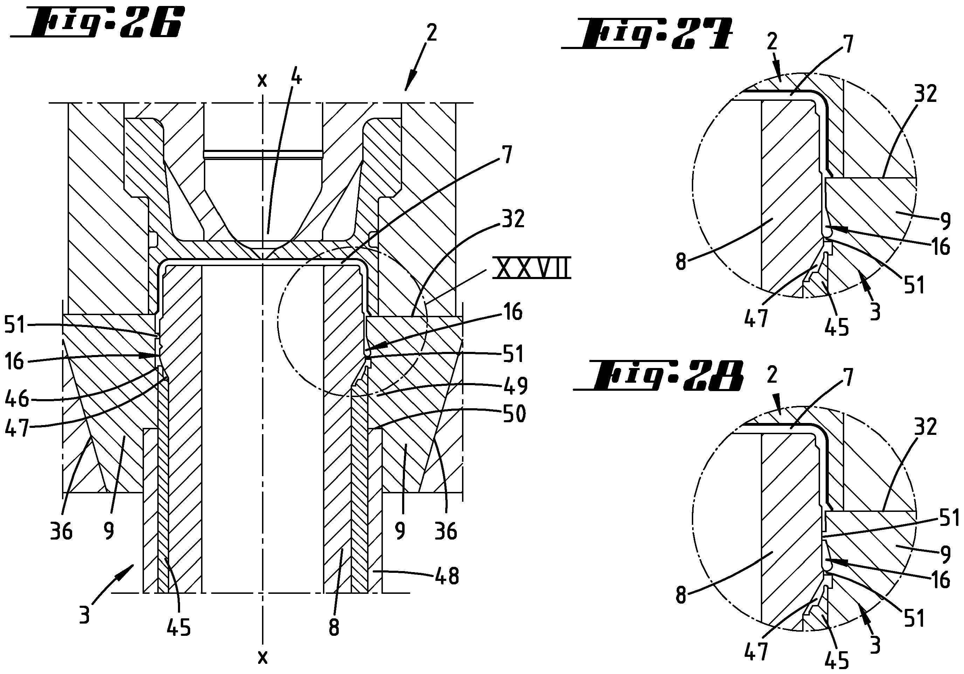

Die Figuren 22 und 25 zeigen weitere Beispiele für in erfindungsgemä-ßen Kunststoff-Spritzwerkzeugen 1 hergestellte Verschlusskappen 5. Diese weisen unterschiedliche Formen von Gelenkausbildungen 19 auf, über welche der Kappenkörper 14 an der Kappendecke 15 angebunden ist. Die weiteren Figuren 23 und 26, sowie die dazugehörigen Vergrößerungen in den Figuren 24 und 27 zeigen in jeweiligen Schnittdarstellung die dazugehörigen erste Formhälfte 2 und zweite Formhälfte 3 mit den entsprechend ausgeformten Teil-Spritzkonturen 16 der Schiebebacken-Werkzeugteile 9. Die Schnittebene ist dabei so gewählt, dass die jeweils dargestellte Kavität 7 die Herstellung einer entlang der jeweiligen Schnittlinie XXIII-XXIII beziehungsweise XXV-XXV geschnittenen Verschlusskappe 5 gemäß Figur 22 beziehungsweise 24 ermöglicht. Figur 28 zeigt einen gegenüber Figur 27 in Umfangsrichtung versetzten Schnitt.

Weiter sind in den Figuren 29 bis 34 unterschiedliche Ausführungsbeispiele von mit einem erfindungsgemäßen Spritzwerkzeug 1 hergestellten Verschlusskappen 5 dargestellt, bei welchen eine Anbindung von Kappenteilen untereinander über lassoartige Fangbänder 41 gegeben ist.

So kann gemäß der Ausführungsform der Figuren 29 und 30 der Kappenkörper 14 zusammen mit der einstückig ausgebildeten Kappendecke 15 über solche Fangbänder 41 auch nach einem Abtrennen von im Originalzustand der Verschlusskappe 5 die Kappe mit einem Fangring 42 verbindenden Stegen 18 entlang einer Abreißlinie in Umfangsrichtung weiter an dem Fangring 42 gefesselt sein. Der Fangring 42 ist im üblichen Nutzungszustand bevorzugt nicht zerstörungsfrei entfernbar beispielsweise an einem Flaschenhals gehaltert. Über die Fangbänder 41 ist auch nach einem Öffnen der Verschlusskappe 5, beispielsweise durch ein Abschrauben der Kappe, die Kappe über den Fangring 42 an der Flasche gefesselt und somit unverlierbar verankert.

Der Fangring 42 kann darüber hinaus zugleich das Garantieband ausbilden.

Es können in Umfangsrichtung zueinander beabstandet zwei Fangbänder 41 ausgebildet sein, sich jeweils etwa über einen Umfangswinkel von beispielsweise 30 bis 40 Grad erstreckend, wobei ein Fangband 41 einernends an dem Fangring 42, der durch den Kappenkörper 14 allein gebildet sein kann, und anderenends an der Kappendecke 15 einstückig und materialeinheitlich angebunden. Diese Anbindung ist dauerhaft gebildet, kann entsprechend nicht über eine übliche Krafteinwirkung durch Abreißen getrennt werden.

Weiter entlang einer in Umfangsrichtung gebildeten Abreißlinie ist in einem Originalitätszustand der Verschlusskappe 5 die Kappendecke 14 über Abreißstege 18 mit dem Fangring 42 beziehungsweise mit dem Kappenkörper 14 verbunden.

Gemäß der Darstellung in Figur 31 kann eine solche Ausgestaltung auch bei einer Verschlusskappe 5 gegeben sein, bei welcher der Fangring 42 zugleich ein Aufschraubgewinde 43 für das kappenseitige Gewinde 44 ausformt.

Gemäß den Ausführungsformen der Darstellungen in den Figuren 31 bis 34 können solche Fangbänder 41 zugleich auch eine Gelenkausbildung 19 bilden.

Zufolge der erfindungsgemäßen Ausbildung des Spritzwerkzeugs 1 kann die Verschlusskappe 5 mit Gelenkausbildung 19 in vorteilhafter Weise auch - wie dargestellt - im Verschlusszustand der Kappe 5 hergestellt werden.

Jedes Schiebebacken-Werkzeugteil 9 ist in einem Ringteil 10 der zweiten Formhälfte 3 schiebeverlagerbar geführt, so beispielsweise zufolge einer nicht näher dargestellten schienenartigen Nut-Feder-Führung 11 bevorzugt in Art einer Schwalbenschwanzführung, welche, bezogen auf die Schnittdarstellung gemäß Figur 3 in demselben spitzen Winkel zu der Verfahrachse x angestellt ist, wie die Außenfläche 36 des Schiebebacken-Werkzeugteils 9 verläuft. In den Darstellungen ist die Feder am Werkzeugteil 9 ausgebildet, die in einer Nut der zweiten Formhälfte 3 beziehungsweise in dem Ringteil 10 schiebeverlagerbar ist. Zufolge dieser Führung 11 wird bei einer linearen Verlagerung der Schiebebacken-Werkzeugteile 9 entlang der Verfahrachse x zugleich eine radiale, senkrecht zu der Verfahrachse x gerichtete Bewegung der Schiebebacken-Werkzeugteile 9 erzeugt. Axiale und radiale Verlagerung sind entsprechend überlagert.

Beide Schiebeendstellungen der Schiebebacken-Werkzeugteile 9 sind bevorzugt anschlagbegrenzt.

Unter Nutzung der Schiebebacken-Werkzeugteile 9 ist in der Kavität 7 mindestens ein Hinterschnittbereich 12 ermöglicht.

Wie beispielsweise in Figur 3 zu erkennen, können sich hierbei auch mehrere Hinterschnittbereiche 12 einstellen, mit gegebenenfalls unterschiedlichen Hinterschnittwinkeln.

Die Schiebebacken-Werkzeugteile 9 können in der zweiten Formhälfte 3 aktiv in Ausstoßrichtung r in eine die Verschlusskappe 5 freigebende Stellung bewegt werden (vergleiche Figur 5).

Darüber hinaus können sich die Schiebebacken-Werkzeugteile 9 in der Formhälften-Schließstellung gemäß Figur 3 mit der der ersten Formhälfte 2 abgewandten, in den Darstellungen entsprechend nach unten gerichteten Oberfläche auf der zugewandten Oberfläche eines Werkzeug-Aufnahmeteils 13 abstützen. Es kann sich, wie auch bevorzugt, eine vollflächige Abstützung der Schiebebacken-Werkzeugteile 9 an dem Werkzeug-Aufnahmeteil 13 ergeben.

Über das Ringteil 10 ist die zweite Formhälfte 3 beziehungsweise sind die verlagerbaren Schiebebacken-Werkzeuge 9 an dem Werkzeug-Aufnahmeteil 13 befestigt. Hierzu weist das Ringteil 10 bei - wie dargestellt - beispielhaft quadratischem Grundriss in den Eckbereichen Durchgangsbohrungen 22 auf, zum Durchtritt von Halterungselementen 23. Letztere wirken halternd mit Öffnungen 24 in dem Werkzeug-Aufnahmeteil 13 zusammen.

Gemäß Figur 8 können diese Halterungselemente 23 Schrauben 25 sein. Die Öffnungen 24 sind in diesem Fall Gewindebohrungen.

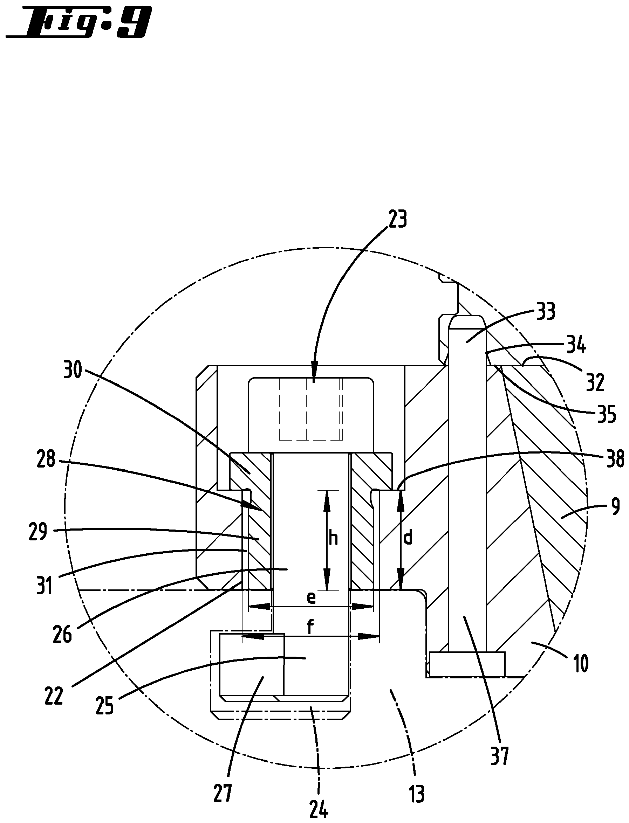

Alternativ können die Halterungselemente 23 beispielsweise in Art eines Schnellverschlusses wirken, weiter beispielsweise aufweisend einen Bolzen 26 und einen von dem Bolzen 26 im Wesentlichen quer hierzu gerichteten, nach radial außen flügelartig abragenden Vorsprung 27, der durch Drehen des Halterungselements 23, beispielsweise um 90 Grad oder mehr, in eine sperrende Wirkstellung bringbar ist (siehe Figur 9). Die Öffnung 13 in dem Werkzeug-Aufnahmeteil 13 kann schlüssellochartig zur Steckaufnahme des freien Endes des Halterungselements 23 ausgebildet sein.

Die Halterungselemente 23 können jeweils mit einem bolzenartigen Abschnitt eine Hülse 28 durchsetzen, die in der Durchgangsbohrung 22 des Ringteils 10 angeordnet ist. Dabei kann die Hülse 28 einen Hülsenzylinder 29 und einen am oberen Ende radial nach außen überstehenden Hülsenkragen 30 aufweisen, mit welchem die Hülse 28 den Rand 38 der Durchgangsbohrung 22 übergreift.

Der Hülsenzylinder 29 weist dabei bevorzugt eine in Achsrichtung betrachtete Höhe h auf, die weiter bevorzugt um wenige Hundertstel bis wenige Zehntel Millimeter, beispielsweise 0,01 bis 0,05, gegebenenfalls 0,1 bis 0,2 Millimeter, größer bemessen ist als die in selber Richtung gemessene Dicke d des Ringteils 10 im Bereich der Durchgangsbohrung 22.

Der äußere Durchmesser e des Hülsenzylinders 29 ist kleiner bemessen als der freie Innendurchmesser f der Durchgangsbohrung 22. So kann der Durchmesser e der Hülse 28 etwa dem 0,6- bis 0,95-Fachen des Innendurchmessers f entsprechen, so dass sich ein ringartiger Freiraum 31 einstellt, der eine Bewegung des Ringteils 10 in einer Richtung quer zur Ausstoßrichtung r von wenigen Zehntel-Millimetern, beispielsweise 0,1 bis 0,5 mm, weiter beispielsweise 1 bis 3 Millimeter, gegebenenfalls bis hin zu beispielsweise 2 bis 5 Millimetern, zulässt.

Die über das Halterungselement 23 an dem Werkzeug-Aufnahmeteil 13 festgelegte Hülse 28 lässt die anschlagbegrenzte Beweglichkeit des Ringteils 10 in einer Richtung senkrecht zur Verfahrachse x zu.

Die beiden Formhälften 2 und 3 können darüber hinaus zur Zentrierung derselben zueinander im Zuge des Zusammenfahrens der Formhälften über eine Formschlussausbildung verfügen.

So kann die zweite Formschlusshälfte 3 in Ausstoßrichtung r über die Trennfläche 32, die den Trennungssprung zwischen den Formhälften definiert, hinaus vorragende Vorsprünge 33 aufweisen, zur formschlüssigen Zusammenwirkung mit an die Vorsprünge 33 angepassten Ausnehmungen 34 in der zugewandten Trennfläche 35 der ersten Formhälfte 2.

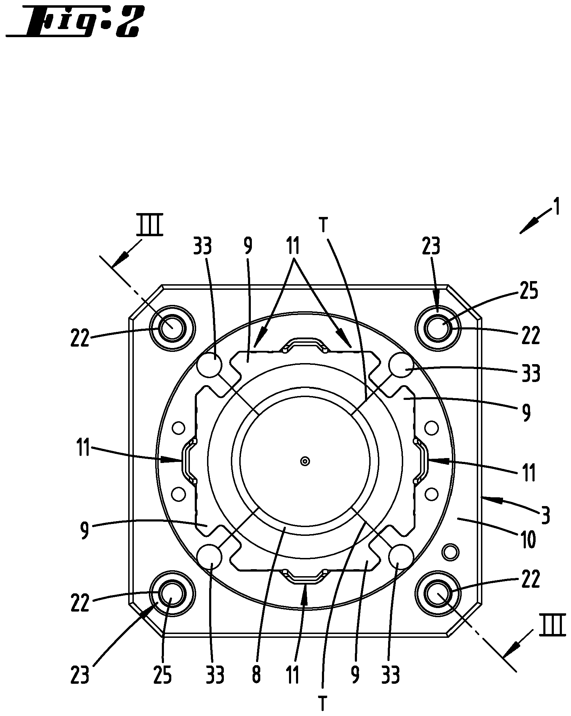

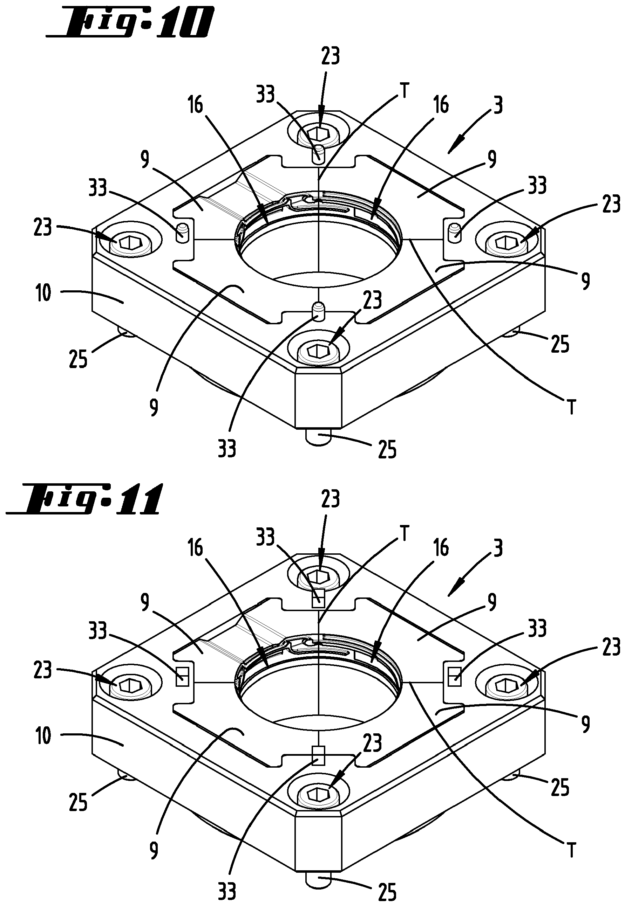

Die Figuren 1 bis 10 zeigen eine Ausführungsform mit zapfenartigen Vorsprüngen 33, die einen im Wesentlichen kreisrunden Grundriss senkrecht zur Ausstoßrichtung r aufweisen. Die Vorsprünge 33 sind in Eckbereichen des Ringteils 10 zwischen den Schiebebacken-Werkzeugteilen 9 angeordnet (siehe Figur 10) und können durch frei über die Trennfläche 32 vorragende freie Enden von das Ringteil 10 im Wesentlichen in Ausstoßrichtung r durchsetzenden Stiften 37 gebildet sein (vergleiche Figuren 3, 5 und 8).

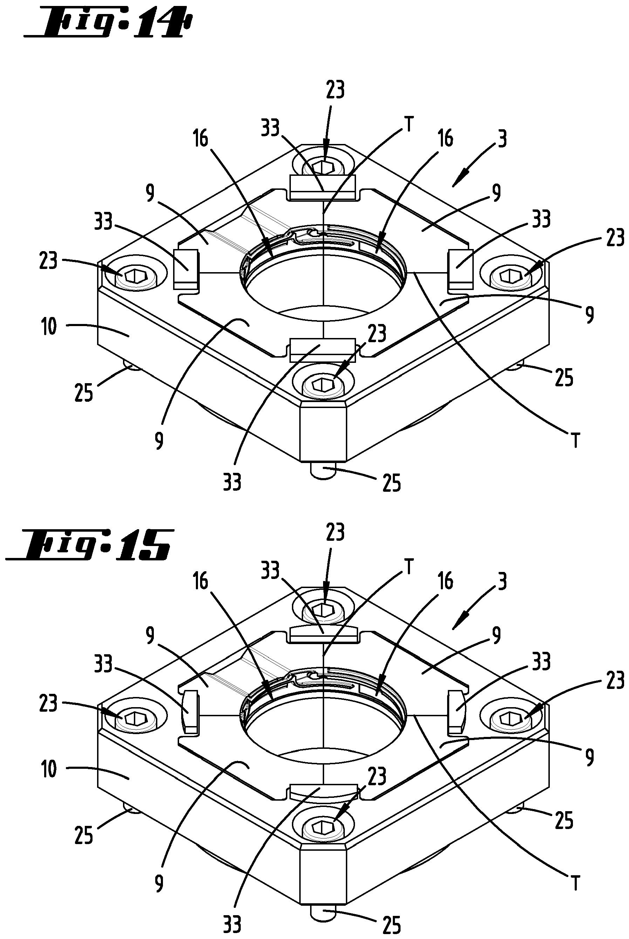

Die Figuren 11 und 13 bis 15 zeigen weitere unterschiedliche Ausbildungen mit Vorsprüngen 33, die einen im Wesentlichen rechteckigen Grundriss aufweisen können (quadratisch, langgestreckt rechteckig, gegebenenfalls mit kreisbogenförmigen Flanken des Vorsprungs).

Figur 12 zeigt eine Alternative, in welcher die Ausnehmungen 34 in der Trennfläche 32 der zweiten Formhälfte 3 etwa zugeordnet der Nut-Feder-Führung 11 für die Schiebebacken-Werkzeugteile 9 ausgebildet sind. So können diese Ausnehmungen 34 nutartig und randoffen sowohl nach radial innen als auch nach radial außen ausgeformt sein, zur Zusammenwirkung mit entsprechend angepassten Vorsprüngen im Bereich der Trennfläche 35 der ersten Formhälfte 2.

Zufolge des vorbeschriebenen, im Zuge jedes Zusammenfahrens der Formhälften 2 und 3 erreichbaren Formschlusses zwischen den Formhälften 2 und 3 wird eine exakte Ausrichtung derselben zueinander bei jedem Spritzvorgang erreicht, was durch die bleibende schwimmende Lagerung der zweiten Formhälfte 3 beziehungsweise des Ringteils 10 weiter unterstützt ist.

**Liste der Bezugszeichen**

| | | | |
|---|---|---|---|
| 1 | Kunststoff-Spritzwerkzeug | 29 | Hülsenzylinder |
| 2 | erste Formhälfte | 30 | Hülsenkragen |
| 3 | zweite Formhälfte | 31 | Freiraum |
| 4 | Anspritzdüse | 32 | Trennfläche |
| 5 | Verschlusskappe | 33 | Vorsprung |
| 6 | Kunststoffmasse | 34 | Ausnehmung |
| 7 | Kavität | 35 | Trennfläche |
| 8 | Werkzeugkern | 36 | Außenfläche |
| 9 | Schiebebacken-Werkzeugteil | 37 | Stift |
| 10 | Ringteil | 38 | Rand |
| 11 | Nut-Feder-Führung | 39 | Trennbereich |
| 12 | Hinterschnittbereich | 40 | Konturabschnitt |
| 13 | Werkzeug-Aufnahmeteil | 41 | Fangband |
| 14 | Kappenkörper | 42 | Fangring |
| 15 | Kappendecke | 43 | Aufschraubgewinde |
| 16 | Teil-Spritzkontur | 44 | Gewinde |
| 17 | Garantieband | 45 | Formabschnitt |
| 18 | Steg | 46 | Rand |
| 19 | Gelenkausbildung | 47 | Abschnitt |
| 20 | gesonderte Struktur | 48 | Ausstoßer |
| 21 | Trennebene | 49 | Anlagebereich |
| 22 | Durchgangsbohrung | 50 | Anlagefläche |
| 23 | Halterungselement | 51 | Anlagebereich |
| 24 | Öffnung | | |
| 25 | Schraube | | |
| 26 | Bolzen | a | Pfeil |
| 27 | Vorsprung | b | Pfeil |
| 28 | Hülse | d | Dicke |
| e | | Durchmesser | |
| f | | Durchmesser | |
| h | | Höhe | |
| r | | Ausstoßrichtung | |
| x | | Verfahrachse | |
| y | | Kappenlängsachse | |
| | | | |
| T | | Teilungsebene | |
| | | | |
| α | | Umfangswinkel | |

## Patentansprüche

1. Kunststoff-Spritzwerkzeug (1) zur Herstellung einer Verschlusskappe (5) mit einem Kappenkörper (14) und einer integral materialeinheitlich mit dem Kappenkörper (14) ausgebildeten Kappendecke (15), wobei die Kappendecke (15) als relativ zu dem Kappenkörper (14) bewegbarer Kappendeckel ausgebildet sein kann, wobei weiter das Spritzwerkzeug (1) in relativ zueinander verfahrbare erste und zweite Formhälften (2, 3) aufgeteilt ist und wobei in der ersten Formhälfte (2) eine Anspritzdüse (4) ausgebildet ist, wobei weiter in der zweiten Formhälfte (3) radial außen zu einem zentralen Werkzeugkern (8) Schiebebacken-Werkzeugteile (9) ausgebildet sind, die zugleich in einer Ausstoßrichtung (r) der hergestellten Verschlusskappe (5) und senkrecht zu der Ausstoßrichtung (r) bewegbar sind, und in den Schiebebacken-Werkzeugteilen (9) jeweils eine Teil-Spritzkontur (16) des Kappenkörpers (14) ausgebildet ist, wobei die Teil-Spritzkonturen (16) zusammengefasst in einer Umfangsrichtung der Verschlusskappe (5) eine Gesamt-Spritzkontur des durch die Schiebebacken-Werkzeugteile (9) gebildeten Teils des Kappenkörpers (14) ergeben, wobei weiter zugeordnet der zweiten Formhälfte (3) ein Ausstoßer (48) vorgesehen ist, zum Ausstoßen der hergestellten Verschlusskappe (5), **dadurch gekennzeichnet, dass** in zwei oder mehr Schiebebacken-Werkzeugteilen (9) zueinander unterschiedliche Teil-Spritzkonturen (16) ausgebildet sind, derart, dass einzeln herstellbare und austauschbare Schiebebacken-Werkzeugteile (9) mit einer bestimmten, jedenfalls zu einem weiteren Schiebebacken-Werkzeugteil (9) unterschiedlichen Teil-Spritzkontur ausgebildet sind und dass ein Schiebebacken-Werkzeugteil (9) in der Ausstoßrichtung (r) vor dem Ausstoßen der Verschlusskappe (5) an zwei in der Ausstoßrichtung (r) hintereinander und zueinander beabstandet liegenden Bereichen (51) in einer Anlage an dem Werkzeugkern (8) ist, die sich gemeinsam in einem Querschnitt durch die zweite Formhälfte zeigen, in welchem Querschnitt eine Kappenlängsachse linienartig verläuft.

2. Kunststoff-Spritzwerkzeug nach Anspruch 1, **dadurch gekennzeichnet, dass** die Teil-Spritzkontur (16) eine Gelenkausbildung (19) ausformt, die sowohl an dem Kappenkörper (14) als auch an der Kappendecke (15) angebunden ist und vollständig in einer oder mehreren Teil-Spritzkonturen (16) ausgebildet ist.

3. Kunststoff-Spritzwerkzeug nach einem der vorhergehenden Ansprüche, **dadurch gekennzeichnet, dass** die Verschlusskappe (5) ein Garantieband (17) aufweist und dass die Spritzkontur für das Garantieband (17) vollständig in der Gesamt-Spritzkontur des Kappenkörpers (14) ausgebildet ist.

4. Kunststoff-Spritzwerkzeug nach einem der vorhergehenden Ansprüche, **dadurch gekennzeichnet, dass** übergreifend über zwei Schiebebacken-Werkzeugteile (9) zwei übereinander befindliche, über eine Umfangswinkel (α) von 20 Grad oder mehr sich erstreckende, durchgehende Anlagebereiche (51) der Schiebebacken-Werkzeugteile (9) vorliegen, die zwischen sich ein Band (41) der Verschlusskappe (5) bilden, das einerends an dem Kappenkörper (14) und anderenends an dem Kappendeckel (15) angebunden ist.

5. Kunststoff-Spritzwerkzeug nach einem der vorhergehenden Ansprüche, **dadurch gekennzeichnet, dass** der Ausstoßer (48) im Hinblick auf die Verschlusskappe (5) vor dem Ausstoßen von den Schiebebacken-Werkzeugteilen (9) axial überdeckt ist.

6. Kunststoff-Spritzwerkzeug nach einem der vorhergehenden Ansprüche, **dadurch gekennzeichnet, dass** zu Beginn eines Ausstoßvorgangs mittels der Schiebebacken-Werkzeugteile (9) und der Verschlusskappe (5) der Werkzeugkern (8) in eine Vorlagestellung verfährt.

7. Kunststoff-Spritzwerkzeug nach einem der vorhergehenden Ansprüche, **dadurch gekennzeichnet, dass** die zweite Formhälfte (3) ein, einen bevorzugt etwa quadratischen Grundriss aufweisendes Ringteil (10) aufweist, in dem die Schiebebacken-Werkzeugteile (9) innenseitig beweglich aufgenommen sind.

8. Kunststoff-Spritzwerkzeug nach einem der vorhergehenden Ansprüche, **dadurch gekennzeichnet, dass** das Ringteil (10) an einem Werkzeug-Aufnahmeteil (13) befestigt ist.

9. Kunststoff-Spritzwerkzeug nach einem der vorhergehenden Ansprüche, **dadurch gekennzeichnet, dass** das Ringteil (10) in einer Ebene senkrecht zur Ausstoßrichtung (r) bewegbar an dem Werkzeug-Aufnahmeteil (13) befestigt ist.

10. Kunststoff-Spritzwerkzeug nach einem der vorhergehenden Ansprüche, **dadurch gekennzeichnet, dass** ein Halterungselement (23) für das Ringteil (10) vorgesehen ist, das unter Zwischenschaltung einer Hülse (28) an dem Werkzeug-Aufnahmeteil (13) befestigt ist, und dass eine Durchgangsbohrung (22) des Ringteils (10), durch welche sich das Halterungselement (23) mit der Hülse (28) erstreckt, zu der Hülse (28) einen Freiraum (31) belässt.

11. Kunststoff-Spritzwerkzeug nach einem der vorhergehenden Ansprüche, **dadurch gekennzeichnet, dass** das Halterungselement (23) als Schraube (25) ausgebildet ist.

12. Kunststoff-Spritzwerkzeug nach einem der vorhergehenden Ansprüche, **dadurch gekennzeichnet, dass** das Halterungselement (23) als Bolzen (26) mit einem durch Drehen in Wirkung bringbaren Vorsprung (27) ausgebildet ist.

13. Kunststoff-Spritzwerkzeug nach einem der vorhergehenden Ansprüche, **dadurch gekennzeichnet, dass** die Formhälften (2, 3) ein oder mehrere Vorsprünge (33) und Ausnehmungen (34) aufweisen, die im Zuge des Zusammenfahrens der Formhälften (2, 3) eine Ausrichtung relativ zueinander bewirken.

14. Verfahren zur Herstellung einer Verschlusskappe (5) in einem Kunststoff-Spritzwerkzeug (1), wobei die Verschlusskappe (5) einen Kappenkörper (14) und eine integral materialeinheitlich mit dem Kappenkörper (14) ausgebildete Kappendecke (15) aufweist, wobei weiter die Kappendecke (15) bevorzugt als relativ zu dem Kappenkörper (14) bewegbarer Kappendeckel ausgebildet ist, wobei das Spritzwerkzeug (1) in relativ zueinander verfahrbare erste und zweite Formhälften (2, 3) aufgeteilt ist und wobei in der ersten Formhälfte (2) eine Anspritzdüse (4) ausgebildet ist und in der zweiten Formhälfte (3) Schiebebacken-Werkzeugteile (9) ausgebildet sind, **dadurch gekennzeichnet, dass** die Mehrzahl der Schiebebacken-Werkzeugteile (9) bezüglich einer Teil-Spritzkontur gleich oder zumindest annähernd gleich ausgebildet sind, während ein Schiebebacken-Werkzeugteil (9) eine zu den weiteren Schiebebacken-Werkzeugteilen (9) unterschiedliche Teil-Spritzkontur aufweist, dass in dem Spritzwerkzeug (1) in einem selben Spritzvorgang der Kappenkörper (14) mit über den Umfang unterschiedlicher Gestaltung in den Schiebebacken-Werkzeugteilen (9) gebildet wird und die Kappendecke (15) in der ersten Formhälfte (2) ausgebildet wird und dass ein Schiebebacken-Werkzeugteil (9) in der Ausstoßrichtung (r) vor dem Ausstoßen der Verschlusskappe (5) an zwei in der Ausstoßrichtung (r) hintereinander und zueinander beabstandet liegenden Bereichen (51) in einer Anlage an dem Werkzeugkern (8) ist, die sich gemeinsam in einem Querschnitt durch die zweite Formhälfte zeigen, in welchem Querschnitt eine Kappenlängsachse linienartig verläuft.

## Claims

1. A plastic injection tool (1) for producing a closure cap (5) with a cap body (14) and a cap cover (15) formed integrally with and of the same material as the cap body (14), wherein the cap cover (15) can be formed as cap lid, which can be moved relative to the cap body (14), wherein the injection tool (1) is further divided into first and second mold halves (2, 3), which can be displaced relative to one another, and wherein an injection nozzle (4) is formed in the first mold half (2), wherein sliding jaw tool parts (9), which can simultaneously be moved in an injection direction (r) of the produced closure cap (5) and perpendicular to the ejection direction (r), are further formed in the second mold half (3) radially outside to a central tool core (8), and a partial injection contour (16) of the cap body (14) is in each case formed in the sliding jaw tool parts (9), wherein the partial injection contours (16), combined in a circumferential direction of the closure cap (5) result in a complete injection contour of the part of the cap body (14), which is formed by the sliding jaw tool parts (9), wherein an ejector (48) is further provided assigned to the second mold half (3), for ejecting the produced closure cap (5), **characterized in that** partial injection contours (16), which differ from one another, are formed in two or more sliding jaw tool parts (9) in such a way that individually producible and exchangeable sliding jaw tool parts (9) are formed by means of a certain partial injection contour, which differs at least from a further sliding jaw tool part (9), and that a sliding jaw tool part (9) is in contact with the tool core (8) in the ejection direction (r) prior to the ejection of the closure cap (5) on two regions (51) located one behind the other in the ejection direction (r).

2. The plastic injection tool according to claim 1, **characterized in that** the partial injection contour (16) forms a joint formation (19), which is connected to the cap body (14) as well as to the cap cover (15), and which is formed completely in one or several partial injection contours (16).

3. The plastic injection tool according to one of the preceding claims, **characterized in that** the closure cap (5) has a tamper indicating band (17) and that the injection contour for the tamper indicating band (17) is formed completely in the complete injection contour of the cap body (14).

4. The plastic injection tool according to one of the preceding claims, **characterized in that**, engaging over two sliding jaw tool parts (9), two continuous contact regions (51) of the sliding jaw tool parts (9), which are located one on top of the other and which extend over a circumferential angle (α) of 20 degrees or more, are present, which form a band (41) of the closure cap (5) between one another, which is connected to the cap body (14) on the one end and to the cap lid (15) on the other end.

5. The plastic injection tool according to one of the preceding claims, **characterized in that** the ejector (48) is axially covered by the sliding jaw tool parts (9) with regard to the closure cap (5) prior to the ejection.

6. The plastic injection tool according to one of the preceding claims, **characterized in that** the tool core (8) displaces into a forward position at the beginning of an ejection process by means of the sliding jaw tool parts (9) and the closure cap (5).

7. The plastic injection tool according to one of the preceding claims, **characterized in that** the second mold half (3) has a ring part (10), having a preferably approximately square outline, in which the sliding jaw tool parts (9) are received so as to be movable on the inner side.

8. The plastic injection tool according to one of the preceding claims, **characterized in that** the ring part (10) is fastened to a tool receiving part (13).

9. The plastic injection tool according to one of the preceding claims, **characterized in that** the ring part (10) is movably fastened to the tool receiving part (13) in a plane perpendicular to the ejection direction (r).

10. The plastic injection tool according to one of the preceding claims, **characterized in that** a holding element (23) for the ring part (10) is provided, which is fastened to the tool receiving part (13) by interconnecting a sleeve (28), and that a passage bore (22) of the ring part (10), through which the holding element (23) extends with the sleeve (28), leaves a free space (31) to the sleeve (28).

11. The plastic injection tool according to one of the preceding claims, **characterized in that** the holding element (23) is formed as screw (25).

12. The plastic injection tool according to one of the preceding claims, **characterized in that** the holding element (23) is formed as bolt (26) with a protrusion (27), which can be made effective by rotating.

13. The plastic injection tool according to one of the preceding claims, **characterized in that** the mold halves (2, 3) have one or several protrusions (33) and recesses (34), which effect an alignment relative to one another in the course of bringing together the mold halves (2, 3).

14. A method for producing a closure cap (5) in a plastic injection tool (1), wherein the closure cap (5) has a cap body (14) and a cap cover (15) formed integrally with and of the same material as the cap body (14), wherein the cap cover (15) is further preferably formed as cap lid, which can be moved relative to the cap body (14), wherein the injection tool (1) is divided into first and second mold halves (2, 3), which can be displaced relative to one another, and wherein an injection nozzle (4) is formed in the first mold half (2) and sliding jaw tool parts (9) are formed in the second mold half (3), **characterized in that** the plurality of the sliding jaw tool parts (9) are formed identically or at least approximately identically with respect to the partial injection contour, while a sliding jaw tool part (9) has a partial injection contour, which differs from the further sliding jaw tool parts (9), that the cap body (14) is formed in the injection tool (1) in a same injection process with a design, which differs over the circumference, in the sliding jaw tool parts (9), and the cap cover (15) is formed in the first mold half (2), and that a sliding jaw tool part (9) is in contact to the tool core (8) in the ejection direction (r) prior to the ejection of the closure cap (5) on two regions (51) located one behind the other and spaced apart from one another in the ejection direction (r), which show themselves jointly in a cross section through the second mold half, in which cross section a cap longitudinal axis runs linearly.

## Revendications

1. Moule d'injection de matière plastique (1) pour la fabrication d'un capuchon de fermeture (5) avec un corps de capuchon (14) et un couvercle de capuchon (15) formé d'un seul tenant avec le corps de capuchon (14), le couvercle de capuchon (15) pouvant être conçu comme un couvercle de capuchon mobile par rapport au corps de capuchon (14), l'outil d'injection (1) étant en outre divisé en une première et une deuxième moitié de moule (2, 3) mobiles l'une par rapport à l'autre, et une buse d'injection (4) étant formée dans la première moitié de moule (2), des parties d'outil à mâchoires coulissantes (9) étant en outre formées dans la deuxième moitié de moule (3) radialement à l'extérieur d'un noyau d'outil central (8), lesquelles peuvent être déplacées en même temps dans une direction d'éjection (r) du capuchon de fermeture (5) fabriqué et perpendiculairement à la direction d'éjection (r), et dans les parties d'outil à mâchoires coulissantes (9) est formé respectivement un contour d'injection partiel (16) du corps de capuchon (14), les contours d'injection partiels (16) réunis dans une direction périphérique du capuchon de fermeture (5) donnant un contour d'injection global de la partie du corps de capuchon (14) formée par les parties d'outil à mâchoires coulissantes , un éjecteur (48) étant en outre prévu, associé à la deuxième moitié de moule (3), pour éjecter le capuchon de fermeture (5) fabriqué, **caractérisé en ce que** des contours d'injection partiels (16) différents les uns des autres sont formés dans deux ou plusieurs pièces d'outil à mâchoires coulissantes (9), de telle sorte que des pièces d'outil à mâchoires coulissantes (9) pouvant être fabriquées et échangées individuellement présentent une forme déterminée, en tout cas différent d'une autre partie d'outil à mâchoires coulissantes (9) et **en ce qu'**une partie d'outil à mâchoires coulissantes (9) est en appui sur le noyau d'outil (8) dans la direction d'éjection (r) avant l'éjection du capuchon de fermeture (5) dans deux zones (51) situées l'une derrière l'autre et à distance l'une de l'autre dans la direction d'éjection (r), qui se présentent ensemble dans une section transversale à travers la deuxième moitié de moule, section transversale dans laquelle un axe longitudinal du capuchon s'étend de manière linéaire.

2. Moule d'injection de matière plastique selon la revendication 1, **caractérisé en ce que** le contour d'injection partiel (16) forme une formation d'articulation (19) qui est attachée à la fois au corps de capuchon (14) et au plafond de capuchon (15) et est entièrement formée dans un ou plusieurs contours d'injection partiels ren (16).

3. Moule d'injection de matière plastique selon l'une des revendications précédentes, **caractérisé en ce que** le capuchon de fermeture (5) présente une bande de garantie (17) et **en ce que** le contour d'injection pour la bande de garantie (17) est formé entièrement dans le contour d'injection global du corps de capuchon (14).

4. Moule d'injection de matière plastique selon l'une des revendications précédentes, **caractérisé en ce qu'**il existe, en chevauchement sur deux parties de moule à mâchoires coulissantes (9), deux zones d'appui continues (51) des parties de moule à mâchoires coulissantes (9), situées l'une au-dessus de l'autre et s'étendant sur un angle circonférentiel (α) de 20 degrés ou plus, qui forment entre elles une bande (41) du capuchon de fermeture (5), qui est attachée à une extrémité au corps de capuchon (14) et à l'autre extrémité au couvercle de capuchon (15).

5. Moule d'injection de matière plastique selon l'une des revendications précédentes, **caractérisé en ce que** l'éjecteur (48) est recouvert axialement par les parties (9) du moule à mâchoires coulissantes par rapport au capuchon de fermeture (5) avant l'éjection.

6. Moule d'injection de matière plastique selon l'une des revendications précédentes, **caractérisé en ce qu'**au début d'une opération d'éjection au moyen des parties de moule à mâchoires coulissantes (9) et du capuchon de fermeture (5), le noyau de moule (8) se déplace dans une position de prépositionnement.

7. Moule d'injection de matière plastique selon l'une des revendications précédentes, **caractérisé en ce que** la deuxième moitié de moule (3) présente une partie annulaire (10) présentant de préférence un plan à peu près carré, dans laquelle les parties de moule à mâchoires coulissantes (9) sont logées de manière mobile du côté intérieur.

8. Moule d'injection de matière plastique selon l'une des revendications précédentes, **caractérisé en ce que** la partie annulaire (10) est fixée à une partie de réception de moule (13).

9. Moule d'injection de matière plastique selon l'une des revendications précédentes, **caractérisé en ce que** la partie annulaire (10) est fixée à la partie de réception de moule (13) de manière mobile dans un plan perpendiculaire à la direction d'éjection (r).

10. Moule d'injection de matière plastique selon l'une des revendications précédentes, **caractérisé en ce qu'**il est prévu un élément de maintien (23) pour la partie annulaire (10), qui est fixé à la partie de réception de moule (13) avec interposition d'une douille (28), et **en ce qu'**un trou traversant (22) de la partie annulaire (10), à travers lequel s'étend l'élément de maintien (23) avec la douille (28), laisse un espace libre (31) par rapport à la douille (28).

11. Moule d'injection de matière plastique selon l'une des revendications précédentes, **caractérisé en ce que** l'élément de maintien (23) est réalisé sous forme de vis (25).

12. Moule d'injection de matière plastique selon l'une des revendications précédentes, **caractérisé en ce que** l'élément de maintien (23) est réalisé sous forme de boulon (26) avec une saillie (27) pouvant être mise en action par rotation.

13. Moule d'injection de matière plastique selon l'une des revendications précédentes, **caractérisé en ce que** les demi-moules (2, 3) présentent une ou plusieurs saillies (33) et évidements (34) qui, au cours du rapprochement des demi-moules (2, 3), provoquent un alignement les uns par rapport aux autres.

14. Procédé de fabrication d'un capuchon de fermeture (5) dans un moule d'injection de matière plastique (1), le capuchon de fermeture (5) comprenant un corps de capuchon (14) et un couvercle de capuchon (15) formé d'un seul tenant avec le corps de capuchon (14), le couvercle de capuchon (15) étant de préférence formé comme un couvercle de capuchon mobile par rapport au corps de capuchon (14), l'outil d'injection (1) étant divisé en une première et une deuxième moitiés de moule (2, 3) mobiles l'une par rapport à l'autre et une buse d'injection (4) étant réalisée dans la première moitié de moule (2) et des parties d'outil à mâchoires coulissantes (9) étant réalisées dans la deuxième moitié de moule (3), **caractérisé en ce que** la majorité des parties d'outil à mâchoires coulissantes (9) sont réalisées de manière identique ou au moins approximativement identique par rapport à un contour d'injection partiel, tandis qu'une partie d'outil à mâchoires coulissantes (9) présente un contour d'injection partiel différent de celui des autres parties d'outil à mâchoires coulissantes (9), **en ce que** dans l'outil d'injection (1), au cours d'une même opération d'injection, le corps de capuchon (14) est formé avec une configuration différente sur la périphérie dans les parties d'outil à mâchoires coulissantes (9) et le couvercle de capuchon (15) est formé dans la première moitié de moule (2) et **en ce qu'**une partie d'outil à mâchoires coulissantes (9) est en appui sur le noyau d'outil (8) dans la direction d'éjection (r) avant l'éjection du capuchon de fermeture (5) dans deux zones (51) situées l'une derrière l'autre et espacées l'une de l'autre dans la direction d'éjection (r), qui se présentent ensemble dans une section transversale à travers la deuxième moitié de moule, section transversale dans laquelle un axe longitudinal du capuchon s'étend de manière linéaire.
